# EUROPEAN PATENT APPLICATION

(11) **EP 4 624 545 A1**
(43) Date of publication of application: **01.10.2025**
(21) Application number: 23931794.4
(22) Date of filing: 17.11.2023
(51) Int. Cl.: C09J 133/08, C09J 133/10, C08F 220/18, C08F 220/14, C08F 220/44, C08F 220/56, H01M 50/409

(54) **POLYMER, SEPARATOR FILM, ELECTRODE SHEET, BATTERY, AND ELECTRICAL APPARATUS**

(30) Priority: 07.04.2023 CN 202310369599
(71) Applicant: Contemporary Amperex Technology Co., Limited, Ningde, Fujian 352100 (CN)
(72) Inventor: LI, Lei, Ningde, Fujian 352100 (CN); KANG, Haiyang, Ningde, Fujian 352100 (CN); ZHENG, Yi, Ningde, Fujian 352100 (CN); SUN, Chengdong, Ningde, Fujian 352100 (CN); HONG, Haiyi, Ningde, Fujian 352100 (CN); CHENG, Xiaonan, Ningde, Fujian 352100 (CN); MA, Yanyun, Ningde, Fujian 352100 (CN)
(74) Representative: Ziebig Hengelhaupt Intellectual Property Attorneys Patentanwaltskanzlei PartGmbB
(86) International application number: PCT/CN2023/132388
(87) International publication number: WO 2024/207748

(57) **Abstract**

Disclosed in the present application are a polymer, a separator film, an electrode sheet, a battery, and an electrical apparatus. The polymer comprises a first organic polymer and a second organic polymer. Polymerization monomers of the first organic polymer comprise a first polymerization monomer, a second polymerization monomer, and a third polymerization monomer. Polymerization monomers of the second organic polymer comprise the first polymerization monomer, the third polymerization monomer, and a fourth polymerization monomer. The structure of the first polymerization monomer comprises: 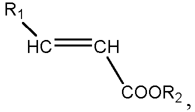 R₁ comprising a hydrogen atom or an alkyl group having 1-18 carbon atoms, and R₂ comprising an alkyl group having 1-18 carbon atoms. The structure of the second polymerization monomer comprises: 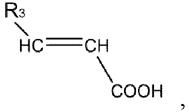 R₃ comprising a hydrogen atom and a substituted or unsubstituted alkyl group having 1-18 carbon atoms. The structure of the third polymerization monomer comprises: 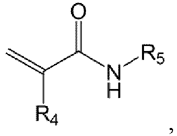 R₄ comprising a hydrogen atom or an alkyl group having 1-6 carbon atoms, and R₅ comprising a hydrogen atom, a hydroxy-substituted alkyl group having 1-6 carbon atoms or an alkoxy group having 1-6 carbon atoms. The structure of the fourth polymerization monomer comprises: 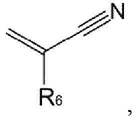 R₆ comprising a hydrogen atom or an alkyl group having 1-6 carbon atoms.

## Description

### TECHNICAL FIELD

The present application relates to the field of batteries, and in particular, to a polymer, a separation film, an electrode plate, a battery, and an electric device.

### BACKGROUND

With the rapid development of portable electronic devices, electric vehicles, and the like in recent years, the demand for power batteries is also increasing. The electrochemical performance of batteries also receives more and more attention.

At present, the separation film binder in batteries is polyvinylidene fluoride. Polyvinylidene fluoride is applied to The separation film is coated with polyvinylidene fluoride, wound along with an electrode plate heated, and compressed, such that the electrode plate is bonded to the separation film, thus increasing the hardness of battery cells and keeping the thickness consistency among battery cells. Without a hot pressing process, a gap may be present between the separation film and the electrode plate, leading to unwanted openings in the battery cells, soft battery cells, wrinkles in the separation films, etc. However, after a hot pressing, the binding force between the electrode plates and the separation film may be excessive and thus causes the detachment of the positive electrode plates and/or negative electrode plates during the cycling of the battery, thereby reducing the cycle performance of the battery.

### SUMMARY

In view of the technical problems in the prior art, the present application provides a polymer to achieve the cold-pressing binding between a separation film and an electrode plate and improve the cycle performance of a battery.

In order to achieve the above objective, one aspect of the present application provides a polymer, where the polymer includes a first organic polymer and a second organic polymer, the monomers of the first organic polymer include a first monomer, a second monomer, and a third monomer, and the monomers of the second organic polymer include the first monomer, the third monomer, and a fourth monomer; the structure of the first monomer includes: 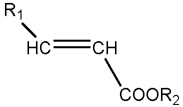
where R₁ includes a hydrogen atom or an alkyl having 1-18 carbon atoms, and R₂ includes an alkyl having 1-18 carbon atoms;
the structure of the second monomer includes: 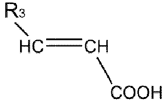
where R₃ includes a hydrogen atom or a substituted or unsubstituted alkyl having 1-18 carbon atoms;
the structure of the third monomer includes: 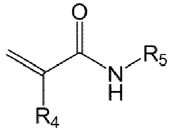
where R₄ includes a hydrogen atom or an alkyl having 1-6 carbon atoms, and R₅ includes a hydrogen atom, a hydroxyl-substituted alkyl having 1-6 carbon atoms, or an alkoxyl having 1-6 carbon atoms;
the structure of the fourth monomer includes: 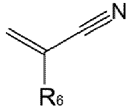
where R₆ includes a hydrogen atom or an alkyl having 1-6 carbon atoms.

The present application at least includes the following beneficial effects: when the polymer is used on a separation film, the polymer has no adhesiveness at a certain temperature, thus facilitating the winding and unwinding of the separation film; when the polymer is wound with the positive electrode plate and the negative electrode plate and subjected to a cold pressing process, the polymer possesses a good binding force, such that the positive electrode plate and the negative electrode plate and the separation film are in close fit with each other. Therefore, the use of the polymer of the present application on a separation film can achieve the cold-pressing binding between the separation film and the electrode plates and provide a proper binding force between the electrode plates and the separation film, thus improving the cycle performance of the battery.

In some embodiments of the present application, the mass ratio of the first organic polymer to the second organic polymer is 1:(0.1-10), optionally 1:(0.5-3). Therefore, the use of the polymer of the present application on the separation film can facilitate the winding and unwinding of the separation film and improve the cold-pressing binding force between the separation film and the positive and negative electrode plates, thus improving the cycle performance of the battery.

In some embodiments of the present application, in the monomers of the first organic polymer, the mass ratio of the first monomer, the second monomer, and the third monomer is 1:(0.05-0.5):(0.05-0.5), optionally 1:(0.056-0.5):(0.056-0.5). Therefore, by controlling the first monomer, the second monomer, and the third monomer for preparing the first organic polymer in the above mixing ratio, the present application can improve the adhesiveness of the polymer and adjust the glass transition temperature of the first organic polymer to a proper range. Also, the carboxyl contained in the second monomer produces a bonding force with the functional groups on the materials of the electrode plates and the separation film, thus improving the binding effect of the electrode plates and the separation film.

In some embodiments of the present application, the mass ratio of the first monomer, the third monomer, and the fourth monomer in the monomers of the second organic polymer is 1:(0.05-0.5):(0.05-0.5), optionally 1:(0.056-0.5):(0.056-0.5). Therefore, by controlling the first monomer, the third monomer, and the fourth monomer for preparing the second organic polymer in the above mixing ratio, the present application can help adjust the glass transition temperature of the second organic polymer to a proper range and improve the ionic conductivity and the adhesiveness of the second organic polymer.

In some embodiments of the present application, the first monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, or 2-hydroxypropyl methacrylate. Therefore, the use of the first monomer can help adjust the glass transition temperature of the polymer and thus improve the swelling resistance of the polymer.

In some embodiments of the present application, the second monomer includes at least one of acrylic acid, methacrylic acid, butenoic acid, or heptenoic acid. Therefore, the use of the second monomer can help adjust the adhesiveness of the first polymer, such that the use of the polymer on the separation film can improve the cold-pressing binding force between the separation film and the electrode plates and thus the cycle performance of the battery.

In some embodiments of the present application, the third monomer includes at least one of acrylamide, N-methylolacrylamide, or N-butoxymethylacrylamide. Therefore, the use of the third monomer can help adjust the molecular weight of the first polymer, such that the use of the polymer on the separation film can improve the cold-pressing binding force between the separation film and the electrode plates and thus the cycle performance of the battery.

In some embodiments of the present application, the fourth monomer includes at least one of acrylonitrile or methacrylonitrile. Therefore, the use of the fourth monomer can improve the adhesiveness and ionic conductivity of the polymer, such that the use of the polymer on the separation film can improve the cold-pressing binding force between the separation film and the electrode plates and reduce the resistance of the battery, thus improving the cycle performance of the battery.

In some embodiments of the present application, the polymer further includes a dispersant, where the dispersant includes at least one of sodium polystyrene sulfonate, sodium gluconate, sodium polyacrylate, sodium polymethacrylate, sodium polyphosphate, sodium lignosulfonate, or sodium polycarboxylate. Therefore, the use of the polymer on the separation film can improve the cold-pressing binding force between the separation film and the electrode plates and thus the cycle performance of the battery.

In some embodiments of the present application, the number average molecular weight of the dispersant is 100-100,000, optionally 5,000-80,000. Therefore, the use of the polymer on the separation film can improve the cold-pressing binding force between the separation film and the electrode plates and thus the cycle performance of the battery.

In some embodiments of the present application, the mass ratio of the first organic polymer, the second organic polymer, and the dispersant is 1:(0.1-10):(0.01-2), optionally 1:(0.5-3):(0.05-1.5). Therefore, the use of the polymer on the separation film can improve the cold-pressing binding force between the separation film and the electrode plates and thus the cycle performance of the battery.

In some embodiments of the present application, the polymer further includes a butadiene-based polymer. Therefore, the use of the polymer on the separation film can improve the cold-pressing binding force between the separation film and the electrode plates and thus the cycle performance of the battery.

In some embodiments of the present application, the glass transition temperature of the butadiene-based polymer is less than or equal to 20 °C, optionally less than or equal to 15 °C. Therefore, the use of the polymer on the separation film can improve the cold-pressing binding force between the separation film and the electrode plates and thus the cycle performance of the battery.

In some embodiments of the present application, the volume average particle size Dv50 of the butadiene-based polymer is 100 nm to 300 nm, optionally 120 nm to 250 nm. Therefore, the use of the polymer on the separation film can improve the cold-pressing binding force between the separation film and the electrode plates and thus the cycle performance of the battery.

In some embodiments of the present application, the viscosity of the butadiene-based polymer at 25 °C is 10 mPa·s to 300 mPa·s, optionally 80 mPa·s to 200 mPa·s. Therefore, the use of the polymer on the separation film can improve the cold-pressing binding force between the separation film and the electrode plates and thus the cycle performance of the battery.

In some embodiments of the present application, the butadiene-based polymer includes at least one of polybutadiene, a styrene/butadiene copolymer, or an acrylonitrile/butadiene copolymer. Therefore, the use of the polymer on the separation film can improve the cold-pressing binding force between the separation film and the electrode plates and thus the cycle performance of the battery.

In some embodiments of the present application, the mass ratio of the first organic polymer, the second organic polymer, and the butadiene-based polymer is 1:(0.1-10):(0.1-10), optionally 1:(0.5-3):(0.5-8). Therefore, the use of the polymer on the separation film can improve the cold-pressing binding force between the separation film and the electrode plates and thus the cycle performance of the battery.

In some embodiments of the present application, the polymer has a first glass transition temperature and a second glass transition temperature; the first glass transition temperature is less than or equal to 25 °C, and the second glass transition temperature is greater than 25 °C. Therefore, the use of the polymer on the separation film can improve the cold-pressing binding force between the separation film and the electrode plates and thus the cycle performance of the battery.

In some embodiments of the present application, the first glass transition temperature is -80 °C to 25 °C, optionally -60 °C to 25 °C. Therefore, the configuration facilitates the exertion of the adhesiveness of the polymer in the cold pressing process and the adhesiveness between the separation film and the electrode plates after the cold pressing and thus improves the cycle performance of the battery.

In some embodiments of the present application, the second glass transition temperature is 26 °C to 100 °C, optionally 26 °C to 90 °C. Therefore, the use of the polymer on the separation film may help the winding and unwinding processes of the separation film at a certain temperature.

In some embodiments of the present application, the volume average particle size Dv50 of the polymer is 1 µm to 15 µm, optionally 5 µm to 10 µm. Therefore, the use of the polymer on the separation film can improve the blocking of pores on the separation film by the polymer and improve the active ion permeability of the separation film.

In some embodiments of the present application, the number-weighted particle size distribution Dn10 of the polymer is 1 µm to 5 µm, optionally 1 µm to 3 µm. Therefore, the use of the polymer on the separation film can improve the blocking of pores on the separation film by the polymer, the active ion permeability of the separation film, and the insufficient energy density of the prepared battery due to the thick coating formed by the polymer applied to the separation film.

A second aspect of the present application provides a method for preparing the polymer described above, including:
blending water, an emulsifier, an initiator, a first organic monomer, a second monomer, and a third monomer to give a first polymer emulsion;
blending water, the emulsifier, the initiator, a first monomer, the third monomer, and a fourth monomer to give a second polymer emulsion; and
mixing the first polymer emulsion and the second polymer emulsion to give a polymer.

Therefore, a polymer with excellent cold-pressing adhesiveness can be prepared with the method above, and the use of the polymer on the separation film can improve the cold-pressing binding force between the separation film and the electrode plates and thus the cycle performance of the battery.

In some embodiments of the present application, a dispersant and/or a butadiene-based polymer is further added during mixing the first polymer emulsion and the second polymer emulsion. Therefore, the use of the polymer on the separation film can improve the cold-pressing binding force between the separation film and the electrode plates and thus the cycle performance of the battery.

A third aspect of the present application provides a separation film, where the separation film includes the polymer described above or a polymer obtained by the method described above. Therefore, the cold-pressing adhesiveness of the separation film and the electrode plates can be improved, thus improving the cycle performance of the battery.

A fourth aspect of the present application provides an electrode plate, where the electrode plate includes the polymer described above or a polymer obtained by the method described above. Therefore, the cold-pressing adhesiveness of the electrode plates and the separation film can be improved, thus improving the cycle performance of the battery.

A fifth aspect of the present application provides a battery, where the battery includes the separation film described above and/or the electrode plate described above. Therefore, the battery has excellent cycle performance.

A sixth aspect of the present application provides an electric device, where the electric device includes the battery described above. Therefore, the electric device has excellent cycle performance and safety performance.

The additional aspects and the advantages of the present application will be partially provided in the following description, will partially become apparent from the following description, or will be learned through the practice of the present application.

### BRIEF DESCRIPTION OF THE DRAWINGS

By reading the detailed description of the preferred embodiments below, various additional advantages and benefits will become apparent to those of ordinary skill in the art. The drawings are provided solely for illustrating the preferred embodiments and shall not be construed as limiting the scope of the present application. Furthermore, the same reference numerals in all the drawings denote identical components. In the drawings:
FIG. 1 is a schematic view of a battery according to one embodiment of the present application.
FIG. 2 is an exploded view of the battery according to one embodiment of the present application as shown in FIG. 1.
FIG. 3 is a schematic view of a battery module according to one embodiment of the present application.
FIG. 4 is a schematic view of a battery pack according to one embodiment of the present application.
FIG. 5 is an exploded view of the battery pack according to one embodiment of the present application shown in FIG. 4.
FIG. 6 is a schematic view of an electric device using a battery as the power source according to one embodiment of the present application.

### Description of the reference numerals:

1, battery; 11, housing; 12, electrode assembly; 13, cover plate; 2, battery module; 3, battery pack; 31, upper case body; 32, lower case body.

### DETAILED DESCRIPTION

Embodiments of the technical solutions of the present application are described in detail below. The following embodiments are only for illustrating the technical solutions of the present application more clearly, and therefore are only exemplary and do not limit the claimed scope of the present application.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

At present, judging from the development of the market situation, the application of secondary batteries is becoming broader. Secondary batteries are not only applied in energy storage power systems such as hydropower, thermal power, wind power, and solar power stations, but are also widely applied in electric transportation vehicles such as electric bicycles, electric motorcycles, electric cars, as well as in military equipment, aerospace, and other fields. As the application of secondary batteries becomes broader, the market demand thereof is also increasing.

A battery cell includes a positive electrode plate, a negative electrode plate, and a separation film. The battery cell has a certain hardness. That is, the positive electrode plate and the negative electrode plate and the separation film that are bonded together fit and support each other to form a structure with a certain thickness, and a structure with a certain thickness may have a certain hardness. The negative electrode will expand during charging and discharging. A weak binding force may lead to a gap formed between the positive and negative electrode plates and the separation film, such that the positive and negative electrode plates and the separation film cannot fit and support each other, resulting in a loosened battery cell and a reduced hardness. As such, the cycle performance of the battery is deteriorated, which directly results in a shortened battery life. The electric vehicle may require more frequent battery replacement, thereby increasing the fees for consumers using the electric vehicle.

The close fit between the separation film and the electrode plates can improve the discharge capacity of the battery, reduce the internal resistance and the polarization loss, prolong the cycle life of the battery, and improve the utilization rate of the secondary battery. The conventional binder used on existing separation films is polyvinylidene fluoride. However, the polyvinylidene fluoride market features a greatly increasing price and limited sources at present, while polyvinylidene fluoride may require a hot pressing process (where the separation film and the electrode plates are stacked and compressed while heating) to tightly attach the separation film to the electrode plates. However, after the hot pressing process, the binding force between the separation film and the positive and negative electrode plates may be excessive, and during the cycling of the battery, the positive electrode active material in the positive electrode plate or the negative electrode active material in the negative electrode plate may be torn off due to the overexpansion of the negative electrode, i.e., the detachment of the positive electrode plate and the negative electrode plate, thereby reducing the cycle performance of the battery.

The polymer of the present application includes a first organic polymer and a second organic polymer, where the monomers of the first organic polymer include a first monomer, a second monomer, and a third monomer, and the monomers of the second organic polymer include the first monomer, the third monomer, and a fourth monomer. The structure of the first monomer includes: 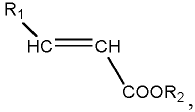 where R₁ includes a hydrogen atom or an alkyl having 1-18 carbon atoms, and R₂ includes an alkyl having 1-18 carbon atoms. The structure of the second monomer includes: 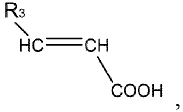 where R₃ includes a hydrogen atom or a substituted or unsubstituted alkyl having 1-18 carbon atoms. The structure of the third monomer includes: 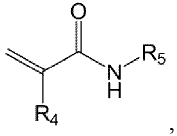 where R₄ includes a hydrogen atom or an alkyl having 1-6 carbon atoms, and R₅ includes a hydrogen atom, a hydroxyl-substituted alkyl having 1-6 carbon atoms, or an alkoxyl having 1-6 carbon atoms. The structure of the fourth monomer includes: 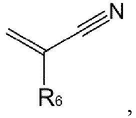 where R₆ includes a hydrogen atom or an alkyl having 1-6 carbon atoms.

The first organic polymer prepared from the first monomer, the second monomer, and the third monomer and the second organic polymer prepared from the first monomer, the third monomer, and the fourth monomer have different glass transition temperatures, and the glass transition temperature of the first organic polymer is lower than that of the second organic polymer. When the polymer is at a temperature between the glass transition temperature of the first organic polymer and the glass transition temperature of the second organic polymer and no pressure is applied to the polymer, the structure of the second organic polymer is in a glass state with a higher hardness and may serve as the skeleton structure of the polymer powder, such that the polymer is non-adhesive, and the separation film can be wound and unwound. The structure of the first organic polymer is in a rubber state at this temperature, and may have certain "fluidity" after a certain pressure is applied. The structure including the first organic polymer in the polymer can fully permeate into pores of the positive and negative electrode plates and the separation film, thus increasing the mechanical interlocking effect to fully exert the binding performance of the polymer, and thereby further improving the cycle performance of the battery.

Therefore, when the polymer is used on a separation film, the polymer has no adhesiveness at a certain temperature, thus facilitating the winding and unwinding of the separation film; when the polymer is wound with the positive electrode plate and the negative electrode plate and subjected to a cold pressing process (where the separation film and the electrode plates are stacked and compressed without heating), the polymer possesses a good binding force, such that the positive electrode plate and the negative electrode plate and the separation film are in close fit with each other. Therefore, the use of the polymer of the present application on a separation film can achieve the cold-pressing binding between the separation film and the electrode plates and provide a proper binding force between the electrode plates and the separation film, thus improving the cycle performance of the battery.

The polymer disclosed in the embodiments of the present application is suitable for a battery, and the battery disclosed in the embodiments of the present application may be used in an electric device using a battery as the power source or various energy storage systems using a battery as the energy storage element. The electric device may include, but is not limited to, a mobile phone, a tablet or laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

A first aspect of the present application provides a polymer, where the polymer includes a first organic polymer and a second organic polymer, the first organic polymer includes a first monomer, a second monomer, and a third monomer, and the monomers of the second organic polymer include the first monomer, the third monomer, and a fourth monomer; the structure of the first monomer includes: 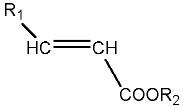
where R₁ includes a hydrogen atom or an alkyl having 1-18 carbon atoms, and R₂ includes an alkyl having 1-18 carbon atoms;
the structure of the second monomer includes: 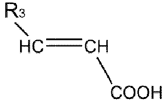
where R₃ includes a hydrogen atom or a substituted or unsubstituted alkyl having 1-18 carbon atoms;
the structure of the third monomer includes: 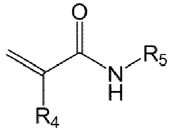
where R₄ includes a hydrogen atom or an alkyl having 1-6 carbon atoms, and R₅ includes a hydrogen atom, a hydroxyl-substituted alkyl having 1-6 carbon atoms, or an alkoxyl having 1-6 carbon atoms;
the structure of the fourth monomer includes: 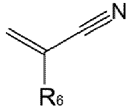
where R₆ includes a hydrogen atom or an alkyl having 1-6 carbon atoms.

The polymer of the present application includes the first organic polymer and the second organic polymer, the monomers of the first organic polymer include the first monomer, the second monomer, and the third monomer, the first monomer includes an unsaturated ester group, the second monomer includes unsaturated carboxyl, and the structure of the third monomer includes an unsaturated amide group. The preparation of the first organic polymer by polymerizing the first monomer, the second monomer, and the third monomer can improve the adhesiveness of the polymer and adjust the glass transition temperature of the first organic polymer to a proper range. Also, the carboxyl contained in the second monomer produces a bonding force with the functional groups on the materials of the electrode plates and the separation film, thus improving the binding effect of the electrode plates and the separation film. The monomers of the second organic polymer include the first monomer, the third monomer, and the fourth monomer, and the structure of the fourth monomer includes unsaturated cyano. The preparation of the second organic polymer by polymerizing the first monomer, the third monomer, and the fourth monomer can help adjust the glass transition temperature of the second organic polymer to a proper range and improve the ionic conductivity and the adhesiveness of the second organic polymer.

The first organic polymer prepared from the first monomer, the second monomer, and the third monomer and the second organic polymer prepared from the first monomer, the third monomer, and the fourth monomer have different glass transition temperatures, and the glass transition temperature of the first organic polymer is lower than that of the second organic polymer. When the polymer is at a temperature between the glass transition temperature of the first organic polymer and the glass transition temperature of the second organic polymer and no pressure is applied to the polymer, the structure of the second organic polymer is in a glass state with a higher hardness and may serve as the skeleton structure of the polymer powder, such that the polymer is non-adhesive, and the separation film can be wound and unwound. The structure of the first organic polymer is in a rubber state at this temperature, and may have certain "fluidity" after a certain pressure is applied. The structure including the first organic polymer in the polymer can fully permeate into pores of the positive and negative electrode plates and the separation film, thus increasing the mechanical interlocking effect to fully exert the binding performance of the polymer, and thereby further improving the battery.

Therefore, when the polymer is used on a separation film, the polymer has no adhesiveness at a certain temperature, thus facilitating the winding and unwinding of the separation film; when the polymer is wound with the positive electrode plate and the negative electrode plate and subjected to a cold pressing process, the polymer possesses a good binding force, such that the positive electrode plate and the negative electrode plate and the separation film are in close fit with each other. Therefore, the use of the polymer of the present application on a separation film can improve the cold-pressing binding force between the separation film and the positive and negative electrode plates and provide a proper binding force between the electrode plates and the separation film, thus improving the cycle performance of the battery.

In some embodiments of the present application, the structure of the first monomer includes: 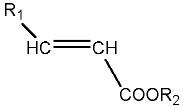 where R₁ includes a hydrogen atom or an alkyl having 1-18 carbon atoms, and R₂ includes an alkyl having 1-18 carbon atoms. The first monomer including an unsaturated ester group is beneficial to the polymerization of the monomers, may improve the swelling resistance of the polymer, and as a flexible monomer chain segment in the molecule chain segment, can help adjust the glass transition temperature of the organic polymer, thus contributing to the adjustment of the glass transition temperatures of the first organic polymer and the second organic polymer in proper ranges.

As an example, the alkyl having 1-18 carbon atoms may be interpreted as an alkyl group with the number of carbon atom being 1-18, e.g., methyl (-CH₃), ethyl (-CH₂CH₃), n-propyl (-CH₂CH₂CH₃), isopropyl (-CH(CH₃)₂), n-butyl (-CH₂CH₂CH₂CH₃), tert-butyl (-C(CH₃)₃), n-pentyl (-CH₂CH₂CH₂CH₂CH₃), n-hexyl (-CH₂CH₂CH₂CH₂CH₂CH₃), and the like.

In some embodiments of the present application, the first monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, or 2-hydroxypropyl methacrylate. Therefore, the use of the first monomer of the present application described above can help adjust the glass transition temperatures of the first organic polymer and the second organic polymer and thus improve the swelling resistance of the polymer.

In some embodiments of the present application, the structure of the second monomer includes: 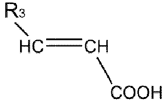 where R₃ includes a hydrogen atom or a substituted or unsubstituted alkyl having 1-18 carbon atoms. Therefore, the second monomer including an unsaturated carboxyl is beneficial to the polymerization of the monomers. The use of the second monomer including a carboxyl during the preparation of the first organic polymer allows the carboxyl and the functional groups on the materials of the electrode plates and the separation film to form a bonding force in the process of compressing the separation film and the electrode plates by using the cold pressing process, thus improving the binding effect.

It should be noted that the substituted alkyl having 1-18 carbon atoms may be interpreted as a group in which at least one hydrogen atom is substituted with another group on the basis of an alkyl group with the number of carbon atom being 1-18, e.g., -CH₂OH, - CH₂CH₂OH, -CH₂CH₂CH₂OH, -CH(CH₂OH)₂, -CH₂CH₂CH₂CH₂OH, -C(CH₂OH)₃, - CH₂CH₂CH₂CH₂CH₂OH, and the like.

In some embodiments of the present application, the second monomer includes at least one of acrylic acid, methacrylic acid, butenoic acid, or heptenoic acid. Therefore, the use of the second monomer of the present application described above can help adjust the binding performance of the first organic polymer.

In some embodiments of the present application, the structure of the third monomer includes: 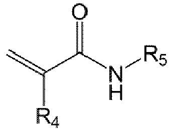 where R₄ includes a hydrogen atom or an alkyl having 1-6 carbon atoms, and R₅ includes a hydrogen atom, a hydroxyl-substituted alkyl having 1-6 carbon atoms, or an alkoxyl having 1-6 carbon atoms. Therefore, the structure of the third monomer including an unsaturated amide group is beneficial to the polymerization of the monomers, and moreover, the monomer may help adjust the molecular weight of the first organic polymer, thus improving the adhesiveness of the polymer.

It should be noted that the hydroxyl-substituted alkyl having 1-6 carbon atoms may be interpreted as a group in which at least one hydrogen atom is substituted by hydroxyl on the basis of an alkyl group with the number of carbon atom being 1-6, e.g., -CH₂OH, -CH₂CH₂OH, -CH₂CH₂CH₂OH, -CH(CH₂OH)₂, -CH₂CH₂CH₂CH₂OH, -C(CH₂OH)₃, - CH₂CH₂CH₂CH₂CH₂OH, and the like. Moreover, the hydroxyl-substituted alkoxyl having 1-6 carbon atoms may be interpreted as a group in which at least one hydrogen atom is substituted by hydroxyl on the basis of an alkoxyl group with the number of carbon atom being 1-6, e.g., methoxyl (HOCH₂O-), ethoxyl (OHCH₂CH₂O-), propoxyl (OHCH₂CH₂CH₂O-), and the like.

In some embodiments of the present application, the third monomer includes at least one of acrylamide, N-methylolacrylamide, or N-butoxymethylacrylamide. Therefore, the use of the third monomer described above can help adjust the molecular weight of the polymer and thus improve the adhesiveness of the polymer.

In some embodiments of the present application, the structure of the fourth monomer includes: 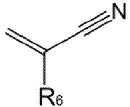 where R₆ includes a hydrogen atom or an alkyl having 1-6 carbon atoms. Therefore, the structure of the fourth monomer including an unsaturated cyano is beneficial to the polymerization of the monomers and can thereby improve the ionic conductivity and the adhesiveness of the second organic polymer.

In some embodiments of the present application, the fourth monomer includes at least one of acrylonitrile or methacrylonitrile. Therefore, the use of the fourth monomer described above can improve the ionic conductivity and the annual adhesiveness of the polymer.

In some embodiments of the present application, the mass ratio of the first organic polymer to the second organic polymer is 1:(0.1-10), e.g., 1:(0.5-9.5), 1:(1-9), 1:(1.5-8.5), 1:(2-8), 1:(2.5-7.5), 1:(3-7), 1:(3.5-6.5), 1:(4-6), 1:(4.5-5.5), 1:(5-5.5), and the like.

The polymer of the present application is a secondary particle formed by agglomerating a primary particle of the first organic polymer and a primary particle of the second organic polymer. Both the primary particle of the first organic polymer and the primary particle of the second organic polymer have the opportunity of being exposed on the surfaces of the secondary particle, and the opportunity of the first organic polymer to be exposed on the surfaces of the secondary particles is regulated by regulating the mass ratio of the first organic polymer to the second organic polymer, so as to regulate the adhesiveness of the polymer. Therefore, the configuration of the mass ratio of the first organic polymer to the second organic polymer in the range described above can provide the polymer with a rubber state and a glass state at a certain temperature. The structure in the glass state has a higher hardness and may serve as the skeleton structure of the polymer powder when no pressure is applied to the polymer, such that the polymer is non-adhesive, and the separation film can be wound and unwound. The structure in the rubber state may have certain "fluidity" after a certain pressure is applied. The structure in the rubber state in the polymer can fully permeate into pores of the positive and negative electrode plates and the separation film, thus increasing the mechanical interlocking effect to fully exert the binding performance of the polymer, and thereby further improving the cycle performance of the battery. Also, the hardness of the composition is insufficient to affect the binding effect between the separation film and the electrode plates. In some other embodiments of the present application, the mass ratio of the first organic polymer to the second organic polymer is 1:(0.5-3).

In some embodiments of the present application, in the monomers of the first organic polymer, the mass ratio of the first monomer, the second monomer, and the third monomer is 1:(0.05-0.5):(0.05-0.5), e.g., 1:(0.1-0.5):(0.05-0.5), 1:(0.15-0.45):(0.05-0.5), 1:(0.2-0.4):(0.05-0.5), 1:(0.25-0.35):(0.05-0.5), 1:(0.3-0.35):(0.05-0.5), 1:(0.05-0.5):(0.1-0.5), 1:(0.05-0.5):(0.15-0.45), 1:(0.05-0.5):(0.2-0.4), 1:(0.05-0.5):(0.25-0.35), 1:(0.05-0.5):(0.3-0.35), and the like. Therefore, by controlling the first monomer, the second monomer, and the third monomer for preparing the first organic polymer in the above mixing ratio, the present application can improve the adhesiveness of the polymer and adjust the glass transition temperature of the first organic polymer to a proper range. Also, the carboxyl contained in the second monomer produces a bonding force with the functional groups on the materials of the electrode plates and the separation film, thus improving the binding effect of the electrode plates and the separation film. In some other embodiments of the present application, in the monomers of the first organic polymer, the mass ratio of the first monomer, the second monomer, and the third monomer is 1:(0.056-0.5):(0.056-0.5).

In some embodiments of the present application, in the monomers of the second organic polymer, the mass ratio of the first monomer, the third monomer, and the fourth monomer is 1:(0.05-0.5):(0.05-0.5), e.g., 1:(0.1-0.5):(0.05-0.5), 1:(0.15-0.45):(0.05-0.5), 1:(0.2-0.4):(0.05-0.5), 1:(0.25-0.35):(0.05-0.5), 1:(0.3-0.35):(0.05-0.5), 1:(0.05-0.5):(0.1-0.5), 1:(0.05-0.5):(0.15-0.45), 1:(0.05-0.5):(0.2-0.4), 1:(0.05-0.5):(0.25-0.35), 1:(0.05-0.5):(0.3-0.35), and the like. Therefore, by controlling the first monomer, the third monomer, and the fourth monomer for preparing the second organic polymer in the above mixing ratio, the present application can help adjust the glass transition temperature of the second organic polymer to a proper range and improve the ionic conductivity and the adhesiveness of the second organic polymer. In some other embodiments of the present application, the mass ratio of the first monomer, the third monomer, and the fourth monomer in the monomers of the second organic polymer is 1:(0.056-0.5):(0.056-0.5).

It should be noted that the first monomer used in the monomers for preparing the first organic polymer and the first monomer used in the monomers for preparing the second organic polymer in the present application may be identical or different, and similarly, the third monomer used in the monomers for preparing the first organic polymer and the third monomer used in the monomers for preparing the second organic polymer may be the same or different. Those skilled in the art are capable of selecting proper monomers according to the actual needs.

In some embodiments of the present application, the polymer further includes a dispersant, where the dispersant includes at least one of sodium polystyrene sulfonate, sodium gluconate, sodium polyacrylate, sodium polymethacrylate, sodium polyphosphate, sodium lignosulfonate, or sodium polycarboxylate.

The addition of the dispersant with the composition described above into the polymer of the present application may provide good dispersing performance for the suspension system and reduce the irregular coagulation of the emulsion system, and the use of the polymer on the separation film can improve the cold-pressing binding force between the separation film and the electrode plates and thus the cycle performance of the battery.

In some embodiments of the present application, the number average molecular weight of the dispersant is 100-100,000, for example, 500-100,000, 3,000-100,000, 5,000-100,000, 8,000-100,000, 10,000-100,000, 30,000-90,000, 50,000-70,000, 50,000-60,000, 55,000-60,000, and the like. Therefore, the addition of the dispersant with the molecular weight described above into the polymer in the present application can reduce the irregular coagulation of the emulsion system, and the use of the polymer on the separation film can improve the cold-pressing binding force between the separation film and the electrode plates and thus the hardness of the battery cell and the cycle performance of the battery. In some embodiments of the present application, the number average molecular weight of the dispersant is 5,000-80,000.

In the present application, the number average molecular weight of the polymer may be determined with reference to standard GB/T21863-2008 gel permeation chromatography. Specifically, in the present application, the determination may be performed by the following method: An ultra high performance polymer chromatograph ACQUITYAPC and a detector ACQUITY differential refraction detector are used. Standard: a polystyrene sleeve; operating time: 30 min; a detector: an ACQUITY differential refraction (RI) detector; column oven temperature: 90 °C; detector temperature: 55 °C. Sample testing: a, preparation of standard sample and test sample: 0.002 g to 0.004 g of the standard sample/test sample is added to 2 mL of the mobile phase to give a 0.1% to 0.5% mixed standard, and the mixed standard is placed in a refrigerator for >8 h; b, standard/sample testing: the samples of interest is edited, an established sample group method is selected, and the running queue is clicked to start the test of the samples after the baseline is stable; (4) data processing: a calibration curve is established by using a chemical workstation according to the relation between the retention time and the molecular weight, and an integral quantification is performed on the sample spectrogram to allow the chemical workstation to automatically generate the number average molecular weight results.

In some embodiments of the present application, the mass ratio of the first organic polymer, the second organic polymer, and the dispersant is 1:(0.1-10):(0.01-2), e.g., 1:(0.5-10):(0.01-2), 1:(1-10):(0.01-2), 1:(2-9):(0.01-2), 1:(3-8):(0.01-2), 1:(4-7):(0.01-2), 1:(5-6):(0.01-2), 1:(0.1-10):(0.05-2), 1:(0.1-10):(0.08-2), 1:(0.1-10):(0.1-2), 1:(0.1-10):(0.3-1.8), 1:(0.1-10):(0.5-1.5), 1:(0.1-10):(0.7-1.2), 1:(0.1-10):(1-1.2), and the like. Therefore, the polymer of the present application including the first organic polymer, the second organic polymer, and the dispersant in the mixing ratio described above can significantly reduce the irregular coagulation of the emulsion system, and the use of the polymer on the separation film can improve the cold-pressing binding force between the separation film and the electrode plates and thus the hardness of the battery cell and the cycle performance of the battery. In some other embodiments of the present application, the mass ratio of the first organic polymer, the second organic polymer, and the dispersant is 1:(0.5-3):(0.05-1.5).

In some embodiments of the present application, the polymer further includes a butadiene-based polymer. Specifically, the weak point of the binding between the separation film and the electrode plates is the binding force between the separation film and the cathode electrode plate, and the common binder in the cathode electrode plate is styrene-butadiene rubber (SBR) that features extremely potent resistance to strong alkali, soft formed membrane, good air permeability, strong binding force, and the like. In addition, binder exposure is commonly seen in the negative electrode plates. That is, part of SBR will be enriched on the surface of the negative electrode plates. In the present application, by adding the butadiene-based polymer into the polymer, the coincidence between the butadiene-based polymer contained in the polymer and the SBR binder enriched on the surface of the negative electrode plate can improve the binding strength between the two phases. Therefore, by adding the butadiene-based copolymer to the polymer, the use of the polymer on the separation film can improve the cold-pressing binding force between the separation film and the cathode electrode plate and thus the cycle performance of the battery.

In some embodiments of the present application, the glass transition temperature of the butadiene-based polymer is less than or equal to 20 °C, e.g., 5 °C to 20 °C, 7 °C to 17 °C, 10 °C to 15 °C, and the like. Therefore, when the butadiene-based polymer with a glass transition temperature of less than or equal to 20 °C is used, the glass transition temperature lower than room temperature keeps the polymer in the rubber state at room temperature and provides certain "fluidity" for the polymer during a cold pressing at room temperature, allowing the polymer to better permeate into the gaps on the surface of the electrode plate to increase the mechanical interlocking effect and to fully contact SBR on the surface of the cathode electrode plate, thereby improving the binding force. In some other embodiments of the present application, the glass transition temperature of the butadiene-based polymer is less than or equal to 15 °C.

In some embodiments of the present application, the volume average particle size Dv50 of the butadiene-based polymer is 100 nm to 300 nm, e.g., 150 nm to 250 nm, 150 nm to 200 nm, and the like. Therefore, the use of the polymer on the separation film can improve the cold-pressing binding force between the separation film and the electrode plates, and a proper binding force between the separation film and the electrode plates can improve the cycle performance of the battery. In some embodiments of the present application, the Dv50 of the butadiene-based polymer is 120 nm to 250 nm.

It should be noted that in the embodiments of the present application, the volume average particle size Dv50 of the butadiene-based polymer is a corresponding particle size when the cumulative percentage of particle size distribution reaches 50%, and the test method is as follows:
Reference is made to the standard GB/T 19077-2016/ISO 13320:2009 particle size distribution laser diffraction method. A laser particle size analyzer (Malvern 3000, MasterSizer 3000) is used for test, where the main light source is a helium neon red light source. 1 g of the sample of interest is added into a clean small beaker, and a drop of a surfactant is added. 20 mL of deionized water is added (to dilute the sample to a concentration corresponding to an obscuration of 8% to 12%), and the mixture is ultrasonicated at 53 KHz/120 W for 5 min to ensure that the sample is completely dispersed. The laser particle size analyzer is started, and after the light path system is cleaned, the background is tested automatically. The ultrasonicated solution of interest is stirred uniformly, the solution is put into a sample cell according to requirements, and the measurement of the particle size starts. The measurement results are read from the instrument.

In some embodiments of the present application, the viscosity of the butadiene-based polymer at 25 °C is 10 mPa·s to 300 mPa·s, e.g., 50 mPa·s to 250 mPa·s, 100 mPa·s to 200 mPa·s, 150 mPa·s to 220 mPa·s, and the like. Therefore, the use of the butadiene-based polymer having such a viscosity can improve the compatibility of the butadiene-based polymer with the first organic polymer and the second organic polymer, such that the use of the polymer on the separation film can improve the cold-pressing binding force between the separation film and the electrode plates. A proper binding force between the separation film and the electrode plates can improve the cycle performance of the battery. In some other embodiments of the present application, the viscosity of the butadiene-based polymer at 25 °C is 80 mPa·s to 200 mPa·s.

It should be noted that in the embodiments of the present application, reference is made to the standard GB/T10247-2008 *viscosity measurement method* for the viscosity test method for the butadiene-based polymer at 25 °C. Specifically, at 25 °C, by using a Brookfield rotary viscometer, the spring generates a torque by means of the shear force on a 62# rotator that rotates continuously at a constant rotating speed in the sample, where the torque is in direct proportion to the viscosity, so as to give a viscosity value.

In some embodiments of the present application, the butadiene-based polymer includes at least one of polybutadiene, a styrene/butadiene copolymer, or an acrylonitrile/butadiene copolymer. Therefore, the use of the butadiene-based polymer with the composition described above in the polymer can improve the cold-pressing binding force between the separation film and the electrode plates, and a proper binding force between the separation film and the electrode plates can improve the cycle performance of the battery.

In some embodiments of the present application, the mass ratio of the first organic polymer, the second organic polymer, and the butadiene-based polymer is 1:(0.1-10):(0.1-10), e.g., 1:(0.5-10):(0.1-10), 1:(1-10):(0.1-10), 1:(2-9):(0.1-10), 1:(3-8):(0.1-10), 1:(4-7):(0.1-10), 1:(5-6):(0.1-10), 1:(0.1-10):(0.5-10), 1:(0.1-10):(1-10), 1:(0.1-10):(2-9), 1:(0.1-10):(3-8), 1:(0.1-10):(4-7), 1:(0.1-10):(5-6), and the like. Therefore, the polymer of the present application includes the first organic polymer, the second organic polymer, and the butadiene-based polymer in the mixing ratio described above, and the use of the polymer on the separation film can improve the cold-pressing binding force between the separation film and the electrode plates and thus the hardness of the battery cell and the cycle performance of the battery. In some other embodiments of the present application, the mass ratio of the first organic polymer, the second organic polymer, and the butadiene-based polymer is 1:(0.5-3):(0.5-8).

It should be noted that the polymer of the present application may include the first organic polymer, the second organic polymer, and the dispersant, or include the first organic polymer, the second organic polymer, and the butadiene-based polymer, or include the first organic polymer, the second organic polymer, the dispersant, and the butadiene-based polymer.

In some embodiments of the present application, the polymer has a first glass transition temperature and a second glass transition temperature; the first glass transition temperature is less than or equal to 25 °C, and the second glass transition temperature is greater than 25 °C. Specifically, the first organic polymer in the present application corresponds to the first glass transition temperature, and the second organic polymer corresponds to the second glass transition temperature.

The glass transition temperature is a temperature at which a polymer transitions from a highly elastic state to a glass state, and refers to the transition temperature of an amorphous polymer (including amorphous portions of a crystalline polymer) from a glass state to a highly elastic state or from the latter to the former. The glass transition temperature is the lowest temperature at which the macromolecular segments of an amorphous polymer move freely, and is generally represented by Tg. Over the glass transition temperature, the high polymer exhibits elasticity; below the glass transition temperature, the high polymer shows exhibits brittleness. The glass transition temperature may be measured by methods commonly used in the art, for example, by differential scanning calorimetry with reference to GB/T19466.2.

It will be appreciated that the first glass transition temperature is less than or equal to 25 °C, and over the first glass transition temperature, the structure including the first organic polymer in the polymer is in the rubber state; the second glass transition temperature is greater than 25 °C, and below the second glass transition temperature, the structure of the second organic polymer in the polymer is in the glass state.

For example, the first glass transition temperature is less than room temperature and the second glass transition temperature is greater than room temperature. At room temperature, when no pressure is applied to the polymer, the second glass transition temperature is higher than room temperature, the structure including the second organic polymer in the polymer is in the glass state with a higher hardness and may serve as the skeleton structure of the polymer powder, such that the polymer is non-adhesive. Since the first glass transition temperature is lower than room temperature, the structure including the first organic polymer in the polymer is in the rubber state at room temperature and may have certain "fluidity" after a certain pressure is applied. The structure of the first organic polymer in the polymer can fully permeate into pores of the positive and negative electrode plates and the separation film, thus increasing the mechanical interlocking effect to fully exert the binding performance of the polymer, and thereby further improving the cycle performance of the battery.

It will be appreciated that when the temperature is higher than the first glass transition temperature, the structure including the first organic polymer in the polymer is in a soft state and may be deformed by a compression force. The structures of the separation film and the electrode plates may have pores, and when the compression force is applied to the polymer, part of the structure of the first organic polymer can penetrate into the pores of the separation film and the electrode plates to bond the separation film and the polymer together to achieve a mechanical interlocking effect, so as to achieve the binding functionality.

Due to the significant difference between the glass transition temperatures of the first organic polymer and the second organic polymer in the polymer, during a cold pressing at a temperature between the first glass transition temperature and the second glass transition temperature, the structure of the first organic polymer in the polymer is in the rubber state, and the structure of the second organic polymer in the polymer is in the glass state, such that the polymer possesses "both soft and hard" properties. After being applied to the separation film, the polymer has no adhesiveness at the temperature between the first glass transition temperature and the second glass transition temperature when no pressure is applied, such that the separation film can be wound and unwound. When a certain pressure is applied, the polymer exhibits pressure sensitivity and excellent adhesiveness, which meet the requirement on the binding force between the separation film and the positive and negative electrode plates.

Therefore, when coating the separation film with the polymer of the present application, the polymer has no adhesiveness at the temperature between the first glass transition temperature and the second glass transition temperature, which facilitates the winding and unwinding of the separation film. However, when the polymer is wound with the positive electrode plate and the negative electrode plate and subjected to a cold pressing process, the polymer possesses a good binding force, such that the positive electrode plate and the negative electrode plate and the separation film are in close fit with each other. Therefore, the use of the polymer of the present application on the separation film can improve the cold-pressing binding force between the separation film and the positive and negative electrode plates and thus the hardness of the battery cell and the cycle performance of the battery.

In some embodiments of the present application, the first glass transition temperature may be any value of -100 °C, -90 °C, -80 °C, -70 °C, -50 °C, -30 °C, -10 °C, 10°C, 20 °C, 24 °C, 25 °C, and the like, and a range between any two of the above point values, which is not particularly limited.

In some embodiments of the present application, the second glass transition temperature may be any value of 26 °C, 30 °C, 50 °C, 80 °C, 100 °C, 200 °C, and the like, and a range between any two of the above point values, which is not particularly limited.

In some embodiments of the present application, the range of the first glass transition temperature is -80 °C to 25 °C, preferably -60 °C to 25 °C.

In the range described above, the structure including the first glass transition temperature in the polymer is in the rubber state at a temperature higher than the first glass transition temperature, which facilitates the exertion of the adhesiveness in the cold pressing process and the adhesiveness between the separation film and the electrode plates after the cold pressing and thus improves the performance of the battery.

In the range of -80 °C to 25 °C described above, the minimum and maximum values and every value between the minimum and maximum values of the range are included, and specific examples include, but are not limited to, the point values in the embodiments, -80 °C, -70 °C, -60 °C, -50 °C, -40 °C, -30 °C, -20 °C, -10 °C, 0 °C, 10 °C, 20 °C, 25 °C, and the like, and a range between any two point values.

In the range of -60 °C to 25 °C described above, the minimum and maximum values and every value between the minimum and maximum values of the range are included, and specific examples include, but are not limited to, the point values in the embodiments, -60 °C, -50 °C, -40 °C, -30 °C, -20 °C, -10 °C, 0 °C, 10 °C, 20 °C, 25 °C, and the like, and a range between any two point values.

In some embodiments of the present application, the range of second glass transition temperature is 26 °C to 100 °C, preferably 26 °C to 90 °C.

In the range described above, the structure including the second glass transition temperature in the polymer is in the glass state at a temperature lower than the second glass transition temperature, which facilitates taking the structure as the skeleton structure of the polymer at a temperature between the first glass transition temperature and the second glass transition temperature, such that the polymer has no adhesiveness, which may help the operations of the winding and unwinding procedures of the separation film at a certain temperature.

In the range of 26 °C to 100 °C described above, the minimum and maximum values and every value between the minimum and maximum values of the range are included, and specific examples include, but are not limited to, the point values in the embodiments, 26 °C, 28 °C, 30 °C, 50 °C, 80 °C, 90 °C, 100 °C, and the like, and a range between any two point values.

In the range of 26 °C to 90 °C described above, the minimum and maximum values and every value between the minimum and maximum values of the range are included, and specific examples include, but are not limited to, the point values in the embodiments, 26 °C, 28 °C, 30 °C, 50 °C, 80 °C, 90 °C, and the like, and a range between any two point values.

In some embodiments of the present application, the volume particle size distribution Dv50 of the polymer is 1 µm to 15 µm, e.g., 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, and the like. In the present application, the use of the polymer meeting the volume average particle size Dv50 on the separation film can improve the risk of blocking the pores on the separation film by the polymer and the energy density of the prepared battery due to the thick coating formed by the polymer applied to the separation film. In some other embodiments of the present application, the volume particle size distribution Dv50 of the polymer is 5 µm to 10 µm.

It should be noted that in the embodiments of the present application, the volume average particle size Dv50 of the polymer is a corresponding particle size when the cumulative percentage of particle size distribution reaches 50%, and the test method is as follows:
Reference is made to the standard GB/T 19077-2016/ISO 13320:2009 particle size distribution laser diffraction method. A laser particle size analyzer (Malvern 3000, MasterSizer 3000) is used for test, where the main light source is a helium neon red light source. 1 g of the sample of interest is added into a clean small beaker, and a drop of a surfactant is added. 20 mL of deionized water is added (to dilute the sample to a concentration corresponding to an obscuration of 8% to 12%), and the mixture is ultrasonicated at 53 KHz/120 W for 5 min to ensure that the sample is completely dispersed. The laser particle size analyzer is started, and after the light path system is cleaned, the background is tested automatically. The ultrasonicated solution of interest is stirred uniformly, the solution is put into a sample cell according to requirements, and the measurement of the particle size starts. The measurement results are read from the instrument.

In some embodiments of the present application, the number-weighted particle size distribution Dn10 of the polymer is 1 µm to 5 µm, e.g., 1 µm, 2 µm, 3 µm, 4 µm, 5 µm, and the like. In the present application, the use of the polymer meeting the number-weighted particle size distribution Dn10 on the separation film can improve the risk of blocking the pores on the separation film by the polymer and the energy density of the prepared battery due to the thick coating formed by the polymer applied to the separation film. Therefore, the use of the polymer on the separation film can improve the blocking of pores on the separation film by the polymer, the active ion permeability of the separation film, and the insufficient energy density of the prepared battery due to the thick coating formed by the polymer applied to the separation film. In some other embodiments of the present application, the number-weighted particle size distribution Dn10 of the polymer is 1 µm to 3 µm.

It should be noted that in the embodiments of the present application, the number-weighted particle size distribution Dn10 of the polymer is a corresponding particle size when the cumulative percentage of particle size distribution reaches 10%. Reference can be made to GB/T19077-2016 for the test method, which uses a Malvern laser particle size analyzer, for example, a system such as Mastersizer-3000 of Malvern, for the characterization.

A second aspect of the present application provides a method for preparing the polymer described above, including:
blending water, an emulsifier, an initiator, a first organic monomer, a second monomer, and a third monomer to give a first polymer emulsion;
blending water, the emulsifier, the initiator, a first monomer, the third monomer, and a fourth monomer to give a second polymer emulsion; and
mixing the first polymer emulsion and the second polymer emulsion to give a polymer.

The first organic polymer is prepared from the first monomer, the second monomer, and the third monomer by emulsion polymerization, and the second organic polymer is prepared from the first monomer, the third monomer, and the fourth monomer by emulsion polymerization. The first organic polymer and the second organic polymer prepared by using the monomers described above have proper first glass transition temperature and second glass transition temperature. The application of the polymers on the separation film can satisfy the non-adhesive requirement of the polymers at room temperature and the cold-pressing binding force between the separation film and positive and negative electrode plates during the cold pressing, thereby improving the hardness of the battery cell and ameliorating the problems of opened battery cells or soft battery cells. Moreover, the application of the separation film coated with the polymers in a battery provides a proper binding force between the separation film and the positive and negative electrode plates and thereby improves the cycle performance of the battery.

In the present application, a first polymer emulsion and a second polymer emulsion are obtained through emulsion polymerization, and the polymer is obtained by spray drying. That is, the polymer includes the first organic polymer and the second organic polymer.

Emulsion polymerization means that monomers are dispersed in water by means of an emulsifier and mechanical stirring to form an emulsion, and then an initiator is added to initiate the polymerization of the monomers.

The emulsifier refers to a class of substances which make immiscible oil and water become a hardly layered emulsion. The emulsifier is usually a surfactant with the nature of some hydrophilic polar groups and hydrophobic (oleophylic) non-polar groups. For example, the emulsifier may be at least one of sodium dodecylsulfonate, sodium dodecylbenzenesulfonate, sodium dodecylsulfate, sodium dodecylbenzenesulfonate, sodium laurate, sodium stearate, or sodium palmitoleate.

The initiator is a substance capable of initiating the polymerization reaction of monomers. For example, a free radical initiator refers to a class of compounds that is easily decomposed into free radicals (i.e., primary free radicals) during heating, and may be used to initiate free radical polymerization and copolymerization of olefine and diene monomers. For example, the initiator may be at least one of potassium persulfate, ammonium persulfate, azobisisobutyronitrile, dimethyl azobisisobutyrate, benzoyl peroxide, or di-n-octanoyl peroxide.

Water, the emulsifier, the initiator, and constituent monomers of the polymer are blended and stirred. Water and the emulsifier are stirred for dispersion to form an emulsion, i.e., the emulsifier forms micelles in an aqueous phase, the monomers are solubilized in most micelles, and in a heating condition, the initiator initiates the polymerization of the monomers in the micelles to give the emulsion.

The spray drying disperses the materials of interest (a mixture of the first polymer emulsion and the second polymer emulsion) into fine mist-like particles by means of mechanical action (to increase the water evaporation area and accelerate the drying process) to contact the particles with hot air to remove most of the water instantly, such that the solid matters in the material are dried to give a powder.

The polymer including the first organic polymer and the second organic polymer is obtained by a spray drying process.

In some embodiments of the present application, the step of mixing and stirring the first polymer emulsion and the second polymer emulsion to give the polymer by spray drying includes: mixing and stirring the first polymer emulsion and the second polymer emulsion to give a mixed emulsion, where the mass ratio of the first organic polymer to the second organic polymer in the mixed emulsion is 1:(0.1-10), preferably 1:(0.5-3).

In some embodiments of the present application, the method further includes: adding a dispersant and/or a butadiene-based polymer during the mixing of the first polymer emulsion and the second polymer emulsion. Specifically, in the present application, the addition of the dispersant during the mixing of the first polymer emulsion and the second polymer emulsion may provide good dispersing performance for the suspension system and reduce the irregular coagulation of the emulsion system, and the use of the polymer on the separation film can improve the cold-pressing binding force between the separation film and the electrode plates and thus the hardness of the battery cell and the cycle performance of the battery. Moreover, by adding the butadiene-based copolymer during the mixing of the first polymer emulsion and the second polymer emulsion, the use of the polymer on the separation film can improve the cold-pressing binding force between the separation film and the electrode plates and thus the hardness of the battery cell and the cycle performance of the battery.

It should be noted that in the present application, the dispersant or the butadiene-based polymer may be separately added or the dispersant and the butadiene-based polymer may be added concurrently during the mixing of the first polymer emulsion and the second polymer emulsion.

Therefore, the use of the polymer on the separation film can improve the cold-pressing binding force between the separation film and the electrode plates, and a proper binding force between the separation film and the electrode plates can improve the cycle performance of the battery.

A third aspect of the present application provides a separation film, including the polymer according to the first aspect of the present application or a polymer obtained by the method according to the second aspect of the present application. Therefore, the use of the polymer of the present application described above on the separation film can improve the cold-pressing binding force between the separation film and the electrode plates, and a proper binding force between the separation film and the electrode plates can improve the cycle performance of the battery.

In some embodiments of the present application, the separation film in the present application includes a base film and a binding layer formed on at least one side of the base film, and the binding layer includes the polymer according to the first aspect of the present application or a polymer obtained by the method according to the second aspect of the present application. For example, the binding layer is formed on two opposite sides of the base film.

The present application does not particularly limit the type of the base film, and any porous-structure base film known to have good chemical stability and mechanical stability may be selected and used.

In some embodiments of the present application, the base film may include at least one of glass fiber, non-woven fabric, polyethylene, polypropylene, or polyvinylidene difluoride. The base film may be a single-layer film or a multi-layer composite film, which is not particularly limited. When the base film is a multi-layer composite film, the materials of the layers may be the same or different, which are not particularly limited.

The separation film of the present application may be prepared by a conventional method in the art. For example, the polymer according to the first aspect of the present application may be dissolved in an organic solvent to give a slurry, then the slurry may be applied to the base film and dried to remove the organic solvent, so as to give the separation film according to the present application.

In some embodiments of the present application, the application density of the polymer is 0.3 g/m² to 1.0 g/m², e.g., 0.4 g/m² to 0.9 g/m², 0.5 g/m² to 0.8 g/m², 0.6 g/m² to 0.7 g/m², and the like on a single side of the base film. Therefore, the binding force between the separation film and the electrode plates can be improved, thus improving the cycle performance of the battery. In some other embodiments of the present application, the application density of the polymer may be 0.3 g/m² to 0.8 g/m² on a single side of the base film.

It should be noted that the method for testing the application density of the polymer on a single side of the base film includes: cutting the separation film coated with the binder by spraying according to a cutting sample plate, measuring the length and the width of the cut sample to give an area S of the sample, and measuring the weight M₁ of the separation film sample coated with the binder by spraying; and similarly, cutting a sample of an binder-free separation film with the same area, and determining the weight M₂, where the application density of the separation film is (M₁ - M₂)/S.

A fourth aspect of the present application provides an electrode plate, where the electrode plate includes the polymer according to the first aspect described above or a polymer obtained by the method according to the second aspect described above. Therefore, the stability of the electrode plates can be improved, thus improving the cycle performance and the safety performance of the battery.

It should be noted that the electrode plate according to the present application may be a positive electrode plate or a negative electrode plate.

The positive electrode plate includes a positive electrode current collector and a positive electrode active substance layer arranged on at least one surface of the positive electrode current collector, where the positive electrode active substance layer includes the polymer according to the first aspect of the present application.

As an example, the positive electrode current collector has two surfaces opposite to each other in its own thickness direction, and the positive electrode active substance layer is disposed on any one or both of the two opposite surfaces of the positive electrode current collector.

In some embodiments of the present application, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments of the present application, a positive electrode active material for use in batteries known in the art may be used as the positive electrode active material.

As an example, when the positive electrode plate is used in a lithium-ion battery, a positive electrode active material for lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}CO_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.8}Co_{0.15}Al_{0.05}O₂), or modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, or a composite material of lithium manganese iron phosphate and carbon.

As an example, when the positive electrode plate is used in a sodium-ion battery, a positive electrode active material for sodium-ion batteries known in the art may be used as the positive electrode active material. As an example, the positive electrode active material may include, but is not limited to, at least one of a layered transition metal oxide, a polyanionic compound, and a Prussian blue analog.

Examples of the layered transition metal oxide may include:
Na₁₋ₓCuₕFeₖMn₁M¹ₘO_{2-y}, where M¹ includes at least one of Li, Be, B, Mg, Al, K, Ca, Ti, Co, Ni, Zn, Ga, Sr, Y, Nb, Mo, In, Sn, or Ba, 0<x≤0.33, 0<h≤0.24, 0≤k≤0.32, 0<1≤0.68, 0≤m<0.1, h+k+1+m=1, and 0≤y<0.2;
Na_{0.67}Mn_{0.7}Ni_{z}M²_{0.3-z}O₂, where M² includes at least one of Li, Mg, Al, Ca, Ti, Fe, Cu, Zn, or Ba, and 0<z≤0.1;
NaₐLi_{b}Ni_{c}MnₐFeₑO₂, where 0.67<a≤1, 0<b<0.2, 0<c<0.3, 0.67<d+e<0.8, and b+c+d+e=1.

Examples of the polyanionic compound may include:
A¹_{f}M³_{g}(PO₄)ᵢOⱼX¹₃₋ⱼ, where A¹ includes at least one of H, Li, Na, K, or NH₄, M³ includes at least one of Ti, Cr, Mn, Fe, Co, Ni, V, Cu, or Zn, X¹ is at least one of F, Cl, or Br, 0<f≤4, 0<g≤2, 1≤i≤3, and 0≤j≤2;
NaₙM⁴PO₄X², where M⁴ includes at least one of Mn, Fe, Co, Ni, Cu, or Zn, X² is at least one of F, Cl, or Br, and 0<n≤2;
NaₚM⁵_{q}(SO₄)₃, where M⁵ includes at least one of Mn, Fe, Co, Ni, Cu, or Zn, 0<p≤2, and 0<q≤2;
NaₛMnₜFe₃₋ₜ(PO₄)₂(P₂O₇), where 0<s≤4, and 0≤t≤3; for example, t is 0, 1, 1.5, 2, or 3.

Examples of the Prussian blue analog may include:
AᵤM⁶ᵥ[M⁷(CN)₆]_{w}·xH₂O, where A includes at least one of H⁺, NH₄⁺, an alkali metal cation, or an alkaline earth metal cation, and M⁶ and M⁷ each independently include at least one of transition metal cations, where 0<u≤2, 0<v≤1, 0<w≤1, and 0<x<6. For example, A includes at least one of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, or Ra²⁺, and M⁶ and M⁷ each independently include at least cations of Ti, V, Cr, Mn, Fe, Co, Ni, Cu, Zn, Sn, or W.

In some embodiments of the present application, the positive electrode active material layer further optionally includes a conductive agent. As an example, the conductive agent may include at least one of superconducting carbon, acetylene black, carbon black, Ketjen black, a carbon dot, a carbon nanotube, graphene, or a carbon nanofiber.

In some embodiments, the positive electrode plate can be prepared in the following manner: dispersing the components described above for preparing the positive electrode plate, such as the positive electrode active material, the conductive agent, the polymer, and any other components, in a solvent (such as N-methylpyrrolidone) to form a positive electrode slurry; and coating the positive electrode current collector with the positive electrode slurry, and performing drying, cold pressing, and other processes, to give the positive electrode plate.

In some embodiments of the present application, on the basis of the total mass of the positive electrode active material layer, the mass proportion of the polymer in the positive electrode plate is 1% to 3%, for example, 1.2% to 2.8%, 1.5% to 2.5%, 1.8% to 2.2%, 2% to 2.2%, and the like. Therefore, the score drop of the positive electrode plate can be reduced, thus improving the cycle performance of the battery containing the positive electrode plate.

Similarly, the electrode plate according to the present application may also be a negative electrode plate. The negative electrode plate includes a negative electrode current collector and a negative electrode active substance layer arranged on at least one surface of the negative electrode current collector, where the negative electrode active substance layer includes the polymer according to the first aspect of the present application or a polymer obtained by the method according to the second aspect of the present application.

As an example, the negative electrode current collector has two surfaces opposite to each other in its own thickness direction, and the negative electrode active substance layer is disposed on any one or both of the two opposite surfaces of the negative electrode current collector.

In some embodiments of the present application, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments of the present application, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, or a silicon alloy. The tin-based material may include at least one of elemental tin, a tin-oxygen compound, or a tin alloy. However, the present application is not limited to these materials, and other conventional materials that can be used as negative electrode active materials for batteries may also be used. These negative electrode active materials may be used alone or in combination of two or more.

In some embodiments of the present application, the negative electrode active substance layer further optionally includes a conductive agent. The conductive agent may include at least one of superconducting carbon, acetylene black, carbon black, Ketjen black, a carbon dot, a carbon nanotube, graphene, or a carbon nanofiber.

In some embodiments of the present application, the negative electrode active substance layer further optionally includes other auxiliary agents, for example, a thickener (e.g., sodium carboxymethylcellulose (CMC-Na)).

In some embodiments of the present application, the negative electrode plate can be prepared in the following manner: dispersing the components described above for preparing the negative electrode plate, such as the negative electrode active material, the conductive agent, and the polymer according to the first aspect of the present application, in a solvent (such as deionized water) to form a negative electrode slurry; and coating the negative electrode current collector with the negative electrode slurry, and performing drying, cold pressing, and other processes, to give the negative electrode plate.

In some embodiments of the present application, on the basis of the total mass of the negative electrode active material layer, the mass proportion of the polymer in the negative electrode plate is 1% to 3%, for example, 1.2% to 2.8%, 1.5% to 2.5%, 1.8% to 2.2%, 2% to 2.2%, and the like. Therefore, the score drop of the negative electrode plate can be reduced, thus improving the cycle performance of the battery containing the negative electrode plate.

A fifth aspect of the present application provides a battery, where the battery includes the separation film according to the third aspect described above and/or the electrode plate according to the fourth aspect described above. Therefore, the battery has excellent safety performance.

Typically, a battery includes a positive electrode plate, a negative electrode plate, an electrolyte, and a separation film. During the charging and discharging process of the battery, active ions are intercalated and deintercalated back and forth on the positive electrode plate and the negative electrode plate. The electrolyte conducts the ions between the positive electrode plate and the negative electrode plate. The separation film is disposed between the positive electrode plate and the negative electrode plate to primarily prevent the positive and negative electrodes from short-circuiting, while allowing the passage of the ions.

The present application does not particularly limit the type of the electrolyte, and a choice can be made as needed. For example, the electrolyte may be liquid, gel, or all solid.

In some embodiments of the present application, the electrolyte is an electrolytic solution. The electrolytic solution includes an electrolyte salt and a solvent.

In some embodiments of the present application, when the battery is a lithium-ion battery, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, or lithium tetrafluoro(oxalato)phosphate.

In some embodiments of the present application, when the battery is a sodium-ion battery, the sodium electrolyte salt may include at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethylsulfonyl)imide.

In some embodiments of the present application, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone.

In some embodiments of the present application, the electrolytic solution further optionally includes an additive. The additive may include a negative electrode film-forming additive and a positive electrode film-forming additive, and may further include an additive capable of improving certain properties of the battery, such as an additive for improving the overcharge performance of the battery, and an additive for improving the high- or lowtemperature performance of the battery.

In some embodiments, the positive electrode plate, the negative electrode plate, and the separation film may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

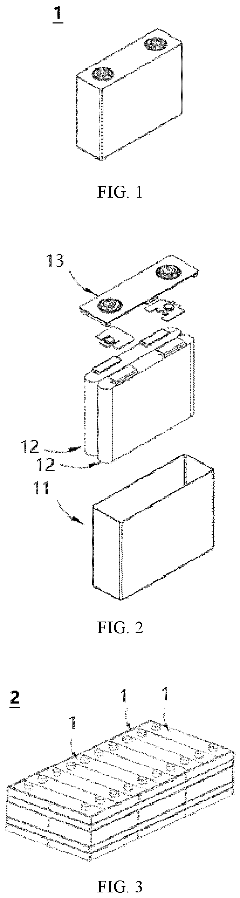

The present application does not particularly limit the shape of the battery, and it may have a cylindrical shape, a prismatic shape, or any other shape. For example, FIG. 1 shows a battery 1 having a prismatic structure as one example.

In some embodiments, referring to FIG. 2, the outer packaging may include a housing 11 and a cover plate 13. The housing 11 may include a bottom plate and a side plate connected to the bottom plate, and the bottom plate and the side plate define, in an enclosing manner, an accommodating cavity. The housing 11 is provided with an opening communicating with the accommodating cavity, and the cover plate 13 is capable of lidding the opening to close the accommodating cavity. The positive electrode plate, the negative electrode plate, and the separation film may be subjected to a winding process or a stacking process to form an electrode assembly 12. The electrode assembly 12 is packaged in the accommodating cavity. The electrolytic solution is infiltrated into the electrode assembly 12. The number of the electrode assembly 12 included in the battery 1 may be one or more, and those skilled in the art can select the number according to specific and actual needs.

In some embodiments, the battery may be assembled into a battery module. The number of batteries included in the battery module may be one or more, and the specific number may be selected by those skilled in the art based on the use and capacity of the battery module.

FIG. 3 shows a battery module 2 as one example. Referring to FIG. 3, in the battery module 2, a plurality of batteries 1 may be sequentially arranged in a length direction of the battery module 2. Certainly, the arrangement may also be in any other manner. Further, the plurality of batteries 1 may be fixed by a fastener.

Optionally, the battery module 2 may further include a shell having an accommodating space in which the plurality of batteries 1 are accommodated.

In some embodiments, the battery module described above may also be assembled into a battery pack. The number of battery modules included in the battery pack may be one or more, and the specific number may be selected by those skilled in the art based on the use and capacity of the battery pack.

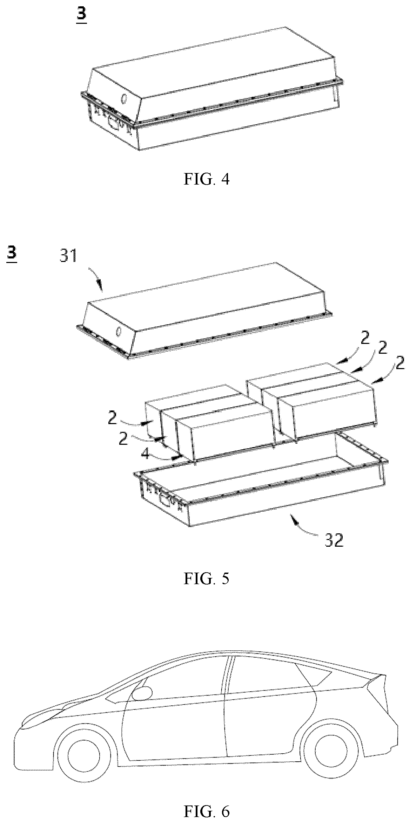

FIG. 4 and FIG. 5 show a battery pack 3 as one example. Referring to FIG. 4 and FIG. 5, the battery pack 3 may include a battery case and a plurality of battery modules 2 arranged in the battery case. The battery case includes an upper case body 31 and a lower case body 32. The upper case body 31 is capable of lidding the lower case body 32 to form a closed space for accommodating the battery modules 2. The plurality of battery modules 2 may be arranged in any manner in the battery case.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a battery can thus be used as a power source.

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Preparation of first polymer emulsion

### Preparation Example A1

Proper amounts of the first monomer methyl acrylate, the second monomer acrylic acid, and the third monomer acrylamide (in a mass ratio of the first monomer, the second monomer, and the third monomer being 90:5:5) were taken and uniformly mixed. 1,000 g of the monomer mixture, 30 g of the emulsifier sodium dodecyl sulfate, 10 g of the initiator ammonium persulfate, and 1,200 g of deionized water were added into a 5,000 mL four-neck flask provided with a mechanical stirrer, a thermometer, and a condensing pipe, and the mixture was stirred at a high speed for emulsification for 30 min. In a nitrogen atmosphere, the system was heated to 75 °C for reaction for 4 h, cooled to a temperature below 40 °C, adjusted to a neutral pH, filtered, and discharged to give the first polymer emulsion A1.

### Preparation Examples A2 to A21

Preparation Examples A2 to A21 were prepared by adjusting the identity and mass ratio of the monomers on the basis of Preparation Example A1, so as to give first polymer emulsions A2 to A21, as shown in Table 1.

**Table 1**

| Identity | First monomer | Second monomer | Third monomer | Mass ratio |
|---|---|---|---|---|
| A1 | Methyl acrylate | Acrylic acid | Acrylamide | 90:5:5 |
| A2 | Methyl acrylate | Acrylic acid | Acrylamide | 80:10:10 |
| A3 | n-Butyl acrylate | Acrylic acid | N-hydroxymethyl acrylamide | 90:5:5 |
| A4 | n-Butyl acrylate | Acrylic acid | N-hydroxymethyl acrylamide | 80:10:10 |
| A5 | n-Butyl acrylate | Acrylic acid | N-hydroxymethyl acrylamide | 70:15:15 |
| A6 | n-Butyl acrylate | Acrylic acid | N-hydroxymethyl acrylamide | 60:20:20 |
| A7 | n-Butyl acrylate | Acrylic acid | N-hydroxymethyl acrylamide | 50:25:25 |
| A8 | Lauryl methacrylate | Methacrylic acid | N-hydroxymethyl acrylamide | 90:5:5 |
| A9 | Lauryl methacrylate | Methacrylic acid | N-hydroxymethyl acrylamide | 80:10:10 |
| A10 | Lauryl methacrylate | Methacrylic acid | N-hydroxymethyl acrylamide | 70:15:15 |
| A11 | Lauryl methacrylate | Methacrylic acid | N-hydroxymethyl acrylamide | 60:20:20 |
| A12 | Lauryl methacrylate | Methacrylic acid | N-hydroxymethyl acrylamide | 50:25:25 |
| A20 | Lauryl methacrylate | Methacrylic acid | N-hydroxymethyl acrylamide | 91:4.5:4.5 |
| A13 | Methyl acrylate | / | Acrylamide | 90:0:10 |
| A14 | n-Butyl acrylate | Acrylic acid | N-hydroxymethyl acrylamide | 30:30:40 |
| A15 | Methyl acrylate | Acrylic acid | / | 90:10:0 |
| A16 | Methyl acrylate | / | / | 100:0:0 |
| A17 | / | Acrylic acid | / | 0:100:0 |
| A18 | / | / | Acrylamide | 0:0:100 |
| A19 | / | Acrylic acid | Acrylamide | 0:50:50 |

| | | | | |
|---|---|---|---|---|
| A21: Proper amounts of the first monomer methyl acrylate, the second monomer acrylic acid, the third monomer acrylamide, and the fourth monomer acrylonitrile (in a mass ratio of the first monomer, the second monomer, the third monomer, and the fourth monomer being 70:10:10:10) were taken, with the other procedures similar to those of the procedures for preparing A1. | | | | |

### Preparation of second polymer emulsion

### Preparation Example B1

The first monomer methyl acrylate, the third monomer acrylamide, and the fourth monomer acrylonitrile were taken according to the mass ratio of the three monomers being 80:10:10 and uniformly mixed. 200 g of the monomer mixture, 6 g of the emulsifier sodium dodecyl sulfate, 2 g of the initiator ammonium persulfate, and 300 g of deionized water were added into a 1000 mL four-neck flask provided with a mechanical stirrer, a thermometer, and a condensing pipe, and the mixture was stirred at a high speed for emulsification for 30 min. In a nitrogen atmosphere, the system was heated to 75 °C for reaction for 4 h, cooled to a temperature below 40 °C, adjusted to a neutral pH, filtered, and discharged to give the second polymer emulsion B1.

### Preparation Examples B2 to B20

Preparation Examples B2 to B20 were prepared by adjusting the identity and mass ratio of the monomers on the basis of Preparation Example B1, so as to give second polymer emulsions B2 to B20, as shown in Table 2.

**Table 2**

| Identity | First monomer | Third monomer | Fourth monomer | Mass ratio |
|---|---|---|---|---|
| B1 | Methyl acrylate | Acrylamide | Acrylonitrile | 80:10:10 |
| B2 | Methyl acrylate | Acrylamide | Acrylonitrile | 70:15:15 |
| B3 | Methyl acrylate | Acrylamide | Acrylonitrile | 60:20:20 |
| B4 | Methyl acrylate | Acrylamide | Acrylonitrile | 50:25:25 |
| B5 | n-Butyl methacrylate | N-hydroxymethyl acrylamide | Methylacrylonitrile | 90:05:05 |
| B6 | n-Butyl methacrylate | N-hydroxymethyl acrylamide | Methylacrylonitrile | 80:10:10 |
| B7 | n-Butyl methacrylate | N-hydroxymethyl acrylamide | Methylacrylonitrile | 70:15:15 |
| B8 | n-Butyl methacrylate | N-hydroxymethyl acrylamide | Methylacrylonitrile | 60:20:20 |
| B9 | tert-Butyl acrylate | N-hydroxymethyl acrylamide | Acrylonitrile | 90:05:05 |
| B10 | tert-Butyl acrylate | N-hydroxymethyl acrylamide | Acrylonitrile | 80:10:10 |
| B11 | tert-Butyl acrylate | N-hydroxymethyl acrylamide | Acrylonitrile | 70:15:15 |
| B12 | tert-Butyl acrylate | N-hydroxymethyl acrylamide | Acrylonitrile | 60:20:20 |
| B20 | tert-Butyl acrylate | N-hydroxymethyl acrylamide | Acrylonitrile | 91:4.5:4.5 |
| B13 | tert-Butyl acrylate | N-hydroxymethyl acrylamide | Acrylonitrile | 90:10:00 |
| B14 | tert-Butyl acrylate | N-hydroxymethyl acrylamide | Acrylonitrile | 50:25:25 |
| B15 | tert-Butyl acrylate | / | Acrylonitrile | 90:0:10 |
| B16 | tert-Butyl acrylate | / | / | 100:0:0 |
| B17 | / | N-hydroxymethyl acrylamide | / | 0:100:0 |
| B18 | / | / | Acrylonitrile | 0:0:100 |
| B19 | / | N-hydroxymethyl acrylamide | Acrylonitrile | 0:50:50 |

### Example 1

### (1) Preparation of polymer

Proper amounts of the first polymer emulsion A1 and the second polymer emulsion B2 were mixed uniformly by stirring according to a 1:1 mass ratio of the first polymer and the second polymer, and then the mixture was subjected to a spray drying process to give the polymer, where the conditions of the spray drying process were as follows: the air inlet temperature was 110 °C, the air outlet temperature was 50 °C, and the air pressure was 0.5 kPa, so as to give the polymer.

### (2) Preparation of separation film

A commercially available PE microporous thin film (from Dongguan Advanced Electronic Technology Co., Ltd.) with a thickness of 7 µm and an average pore size of 80 nm was used as a base film. The polymer prepared above was mixed uniformly by stirring in deionized water to give a slurry (the solid content was 20%). The slurry was sprayed on both surfaces of the base film, the base film was dried to remove the solvent, and the application density of the applied composition on the substrate was 1.5 g/m², so as to give the separation film.

### (3) Preparation of positive electrode plate

Polyvinylidene difluoride (PVDF), lithium iron phosphate (LFP), the conductive agent carbon black, and N-methylpyrrolidone (NMP) were uniformly mixed by fully stirring according to a mass ratio of 1.2:58.38:0.42:40 to prepare a positive electrode slurry. The positive electrode slurry was uniformly applied to a positive electrode current collector aluminum foil at the loading capacity of 200 g/m², and the foil was subjected to drying, cold pressing, and cutting to give a positive electrode plate.

### (4) Preparation of negative electrode plate

Artificial graphite, the conductive agent acetylene black, the binder styrene-butadiene rubber (SBR), and a thickener sodium carboxymethylcellulose (CMC-Na) were added into deionized water according to a mass ratio of 96.2: 1.0: 1.6: 1.2, and the mixture was fully stirred and uniformly mixed to prepare a negative electrode slurry (the solid content was 63%). The negative electrode slurry was applied to a negative electrode current collector copper foil at the loading capacity of 98 g/m², and the foil was subjected to drying, cold pressing, and cutting to give a negative electrode plate.

### (5) Preparation of an electrolytic solution

Ethylene carbonate (EC), ethyl methyl carbonate (EMC), and diethyl carbonate (DEC) were mixed at a volume ratio of 1:1:1 at 25 °C to give a mixed solvent, and then LiPF₆ was dissolved in the mixed solvent to give the electrolytic solution, where the concentration of LiPF₆ was 1 mol/L.

### (6) Preparation of a secondary battery

The positive electrode plate, the separation film, and the negative electrode plate were stacked in sequence and wound, and were subjected to cold pressing molding (the separation film was bound to the electrode plate in the process) to give a battery cell; and the battery cell was put into an outer packaging, the prepared electrolytic solution was added, and packaging, standing, formation, aging, and other procedures were conducted to give the secondary battery.

The methods for preparing the lithium-ion battery in Examples 2-60 and Comparative Examples 1-14 were the same as those in Examples except that the identities and mass ratios of the first polymer emulsion, the second polymer emulsion, the dispersant, and the butadiene-based polymer were adjusted based on Example 1 to give the polymers of Examples 2-60 and Comparative Examples 1-14, as shown in Table 3.

**Table 3**

| No. | First polymer | Second polymer | Dispersant | | Butadiene-based polymer | | | | Mass ratio of first polymer, second polymer, dispersant, and butadiene-based polymer |
|---|---|---|---|---|---|---|---|---|---|
| | | | Composition | Number average molecular weight | Composition | Glass transition temperature (°C) | Dv50 (nm) | Viscosity at 25 °C (mPa·s) | |
| Example 1 | A1 | B2 | / | / | / | / | / | / | 1:1:0:0 |
| Example 2 | A7 | B2 | / | / | / | / | / | / | 1:1:0:0 |
| Example 3 | A11 | B2 | / | / | / | / | / | / | 1:1:0:0 |
| Example 4 | A1 | B6 | / | / | / | / | / | / | 1:1:0:0 |
| Example 5 | A1 | B10 | / | / | / | / | / | / | 1:1:0:0 |
| Example 6 | A1 | B2 | / | / | / | / | / | / | 1:0.1:0:0 |
| Example 7 | A1 | B2 | / | / | / | / | / | / | 1:5:0:0 |
| Example 8 | A1 | B2 | / | / | / | / | / | / | 1:10:0:0 |
| Example 9 | A1 | B2 | / | / | / | / | / | / | 1:15:0:0 |
| Example 10 | A7 | B2 | / | / | / | / | / | / | 1:1:0:0 |
| Example 11 | A7 | B2 | / | / | / | / | / | / | 1:1:0:0 |
| Example 12 | A7 | B2 | / | / | / | / | / | / | 1:1:0:0 |
| Example 13 | A7 | B2 | / | / | / | / | / | / | 1:1:0:0 |
| Example 14 | A7 | B2 | / | / | / | / | / | / | 1:1:0:0 |
| Example 15 | A2 | B1 | / | / | / | / | / | / | 1:1:0:0 |
| Example 16 | A3 | B3 | / | / | / | / | / | / | 1:1:0:0 |
| Example 17 | A4 | B4 | / | / | / | / | / | / | 1:1:0:0 |
| Example 18 | A5 | B5 | / | / | / | / | / | / | 1:1:0:0 |
| Example 19 | A6 | B7 | / | / | / | / | / | / | 1:1:0:0 |
| Example 20 | A8 | B8 | / | / | / | / | / | / | 1:1:0:0 |
| Example 21 | A9 | B9 | / | / | / | / | / | / | 1:1:0:0 |
| Example 22 | A10 | B11 | / | / | / | / | / | / | 1:1:0:0 |
| Example 23 | A20 | B20 | / | / | / | / | / | / | 1:1:0:0 |
| Example 24 | A12 | B12 | / | / | / | / | / | / | 1:1:0:0 |
| Example 25 | A2 | B1 | Sodium polystyrene sulfonate | 5000 | / | / | / | / | 1:1:1:0 |
| Example 26 | A2 | B1 | Sodium polystyrene sulfonate | 20000 | / | / | / | / | 1:1:1:0 |
| Example 27 | A2 | B1 | Sodium polystyrene sulfonate | 50000 | / | / | / | / | 1:1:1:0 |
| Example 28 | A2 | B1 | Sodium polystyrene sulfonate | 80000 | / | / | / | / | 1:1:1:0 |
| Example 29 | A2 | B1 | Sodium gluconate | 20000 | / | / | / | / | 1:1:1:0 |
| Example 30 | A2 | B1 | Sodium polyacrylate | 20000 | / | / | / | / | 1:1:1:0 |
| Example 31 | A2 | B1 | Sodium polystyrene sulfonate | 20000 | / | / | / | / | 1:1:0.01:0 |
| Example 32 | A2 | B1 | Sodium polystyrene sulfonate | 20000 | / | / | / | / | 1:1:0.05:0 |
| Example 33 | A2 | B1 | Sodium polystyrene sulfonate | 20000 | / | / | / | / | 1:1:0.2:0 |
| Example 34 | A2 | B1 | Sodium polystyrene sulfonate | 20000 | / | / | / | / | 1:1:0.5:0 |
| Example 35 | A2 | B1 | Sodium polystyrene sulfonate | 20000 | / | / | / | / | 1:1:1:0 |
| Example 36 | A2 | B1 | Sodium polystyrene sulfonate | 20000 | / | / | / | / | 1:1:1.5:0 |
| Example 37 | A2 | B1 | Sodium polystyrene sulfonate | 20000 | / | / | / | / | 1:1:2:0 |
| Example 38 | A2 | B1 | Sodium polystyrene sulfonate | 20000 | Styrene/butadiene copolymer | 15 | 100 | 180 | 1:1:1:1 |
| Example 39 | A2 | B1 | Sodium polystyrene sulfonate | 20000 | Styrene/butadiene copolymer | 15 | 200 | 180 | 1:1:1:1 |
| Example 40 | A2 | B1 | Sodium polystyrene sulfonate | 20000 | Styrene/butadiene copolymer | 15 | 300 | 180 | 1:1:1:1 |
| Example 41 | A2 | B1 | Sodium polystyrene sulfonate | 20000 | Styrene/butadiene copolymer | 15 | 200 | 180 | 1:1:1:0.1 |
| Example 42 | A2 | B1 | Sodium polystyrene sulfonate | 20000 | Styrene/butadiene copolymer | 15 | 200 | 180 | 1:1:1:0.5 |
| Example 43 | A2 | B1 | Sodium polystyrene sulfonate | 20000 | Styrene/butadiene copolymer | 15 | 200 | 180 | 1:1:1:1 |
| Example 44 | A2 | B1 | Sodium polystyrene sulfonate | 20000 | Styrene/butadiene copolymer | 15 | 200 | 180 | 1:1:1:3 |
| Example 45 | A2 | B1 | Sodium polystyrene sulfonate | 20000 | Styrene/butadiene copolymer | 15 | 200 | 180 | 1:1:1:5 |
| Example 46 | A2 | B1 | Sodium polystyrene sulfonate | 20000 | Styrene/butadiene copolymer | 15 | 200 | 180 | 1:1:1:8 |
| Example 47 | A2 | B1 | Sodium polystyrene sulfonate | 20000 | Styrene/butadiene copolymer | 15 | 200 | 180 | 1:1:1:10 |
| Example 48 | A2 | B1 | / | / | Styrene/butadiene copolymer | 15 | 100 | 180 | 1:1:0:1 |
| Example 49 | A2 | B1 | / | / | Styrene/butadiene copolymer | 15 | 200 | 180 | 1:1:0:1 |
| Example 50 | A2 | B1 | / | / | Styrene/butadiene copolymer | 15 | 300 | 180 | 1:1:0:1 |
| Example 51 | A2 | B1 | / | / | Styrene/butadiene copolymer | 15 | 200 | 180 | 1:1:0:0.1 |
| Example 52 | A2 | B1 | / | / | Styrene/butadiene copolymer | 15 | 200 | 180 | 1:1:0:0.5 |
| Example 53 | A2 | B1 | / | / | Styrene/butadiene copolymer | 15 | 200 | 180 | 1:1:0:1 |
| Example 54 | A2 | B1 | / | / | Styrene/butadiene copolymer | 15 | 200 | 180 | 1:1:0:3 |
| Example 55 | A2 | B1 | / | / | Styrene/butadiene copolymer | 15 | 200 | 180 | 1:1:0:5 |
| Example 56 | A2 | B1 | / | / | Styrene/butadiene copolymer | 15 | 200 | 180 | 1:1:0:8 |
| Example 57 | A2 | B1 | / | / | Styrene/butadiene copolymer | 15 | 200 | 180 | 1:1:0:10 |
| Example 58 | A14 | B14 | / | / | / | / | / | / | 1:1:0:0 |
| Example 59 | A14 | B13 | / | / | / | / | / | / | 1:1:0:0 |
| Example 60 | A14 | B2 | / | / | / | / | / | / | 1:1:0:0 |
| Comparative Example 1 | / | B3 | / | / | / | / | / | / | / |
| Comparative Example 2 | A1 | / | / | / | / | / | / | / | / |
| Comparative Example 3 | A13 | B2 | / | / | / | / | / | / | 1:1:0:0 |
| Comparative Example 4 | A15 | B2 | / | / | / | / | / | / | 1:1:0:0 |
| Comparative Example 5 | A16 | B2 | / | / | / | / | / | / | 1:1:0:0 |
| Comparative Example 6 | A17 | B2 | / | / | / | / | / | / | 1:1:0:0 |
| Comparative Example 7 | A18 | B2 | / | / | / | / | / | / | 1:1:0:0 |
| Comparative Example 8 | A19 | B2 | / | / | / | / | / | / | 1:1:0:0 |
| Comparative Example 9 | A1 | B15 | / | / | / | / | / | / | 1:1:0:0 |
| Comparative Example 10 | A1 | B16 | / | / | / | / | / | / | 1:1:0:0 |
| Comparative Example 11 | A1 | B17 | / | / | / | / | / | / | 1:1:0:0 |
| Comparative Example 12 | A1 | B18 | / | / | / | / | / | / | 1:1:0:0 |
| Comparative Example 13 | A1 | B19 | / | / | / | / | / | / | 1:1:0:0 |
| Comparative Example 14 | A20 | / | / | / | / | / | / | / | / |

The particle sizes and glass transition temperatures of the polymers obtained in Examples 1 to 60 and Comparative Examples 1 to 14, the cold-pressing binding force between the electrode plates and the separation film in the obtained battery, the hardness of the battery cell, and the cycle performance of the battery were characterized, and the characterization results are shown in Table 4.

### Performance Testing

### (1) Test for polymer particle size

A laser particle size analyzer (Malvern 3000, MasterSizer 3000) was used for test, where the main light source was a helium neon red light source. 1 g of the sample of interest was added into a clean small beaker. 20 mL of deionized water was added, and the mixture was ultrasonicated at 53 KHz/120 W for 5 min to ensure that the sample was completely dispersed. The laser particle size analyzer was started, and after the light path system was cleaned, the background was tested automatically. The ultrasonicated solution of interest was stirred uniformly, the solution was put into a sample cell according to requirements, and the measurement of the particle size started. The measurement results were read from the instrument.

### (2) Glass transition temperature test

A sample of 6 ± 0.05 mg was placed in an A1 crucible. The crucible was covered with a lid after the sample was leveled out by shaking. A test was performed by using a measuring instrument Netzsch DSC 3500 Sirius. In a nitrogen atmosphere, the speed of the purge gas was 50 mL/min, and the speed of the protective gas was 100 mL/min; temperature ramping conditions: the ramping rate was 10 °C/min, and the temperature range was -70 °C to 200 °C.

### (3) Cold-pressing binding test procedures

The negative electrode plate and the separation film were overlapped together and placed on a hot press, and parameters of the hot press were set as follows: the temperature was 25 °C, the pressure was 7 t, and the time was 15 s. A pressure was applied to prepare a bound separation film/negative electrode plate sample; the separation film/negative electrode plate sample was cut into 150 mm×20 mm rectangular sample strips. One surface of the electrode plate of the rectangular sample strip was adhered to a steel plate by a double-sided adhesive tape, and the separation film and the electrode plate were separated at one end of the rectangular sample strip by 2 cm along the length direction to prepare a test sample.

The steel plate was held horizontally and fixed by the lower clamp of a universal tester (Xieqiang Instrument Manufacturing (Shanghai) Co., Ltd., CTM2100), and the peeled end of the separation film described above was fixed by the upper clamp of the universal tester and connected to a tensile machine. Test conditions were set as follows: the tensile rate was 20 mm/min and the horizontal pull was 10 cm. After the tension was stable, the tension value was recorded, and the binding force between the separation film and the electrode plate was obtained according to the ratio of the tension value to the width of the sample.

### (4) Cell hardness test procedures

The obtained battery cell was placed on a horizontal bench. The middle hollow part with a width of 12 cm was fixed, the battery cell was naturally kept flat, and the amplitude of the deviation of the central position of the battery cell from the reference horizontal line was measured to evaluate the hardness of the battery cell. A greater amplitude of the deviation of the center position of the battery cell from the reference horizontal line indicates a lower battery cell hardness.

### (5) Battery cycle performance test procedures

At 25 °C, the prepared battery was charged to 3.65 V at a 1/3 C constant current, then charged to 0.05 C at a 3.65 V constant voltage, placed for 5 min, and then discharged to 2.5 V at 1/3 C. The obtained discharge capacity was marked as the initial capacity C₀, the procedures were repeated for the same battery, and the discharge capacity Cₙ of the battery after the n^{th} cycle was recorded. The battery capacity retention rate after each cycle Pₙ = (Cₙ/C₀) × 100%. That is, the difference in the cycle performance may be reflected by the capacity retention rate of the battery after 500 cycles.

**Table 4**

| No. | Volume average particle size of polymer Dv50/µm | First glass transition temperature of polymer Tg/°C | Second glass transition temperature Tg/°C | Cold-pressing binding force (N/m) | Center deviation amplitude of battery cell (mm) | Capacity retention rate (%) |
|---|---|---|---|---|---|---|
| Example 1 | 7 | 16.9 | 38.5 | 26.42 | 0 | 97 |
| Example 2 | 7 | 9.5 | 38.5 | 22.87 | 0 | 96 |
| Example 3 | 7 | -13.3 | 38.5 | 22.12 | 0 | 96 |
| Example 4 | 7 | 16.9 | 46.5 | 24.76 | 0 | 96 |
| Example 5 | 7 | 16.9 | 68.8 | 23.61 | 0 | 96 |
| Example 6 | 7 | 16.9 | 38.5 | 9.36 | 0 | 92 |
| Example 7 | 7 | 16.9 | 38.5 | 17.5 | 0 | 95 |
| Example 8 | 7 | 16.9 | 38.5 | 14.37 | 0 | 94 |
| Example 9 | 7 | 16.9 | 38.5 | 6.56 | 0.5 | 91 |
| Example 10 | 0.5 | 9.5 | 38.5 | 7.39 | 0.3 | 92 |
| Example 11 | 1 | 9.5 | 38.5 | 10.43 | 0 | 93 |
| Example 12 | 10 | 9.5 | 38.5 | 23.12 | 0 | 96 |
| Example 13 | 15 | 9.5 | 38.5 | 19.3 | 0 | 95 |
| Example 14 | 18 | 9.5 | 38.5 | 8.63 | 0.2 | 92 |
| Example 15 | 7 | 24.8 | 27.6 | 15.54 | 0 | 94 |
| Example 16 | 7 | -44.4 | 50.1 | 17.63 | 0 | 95 |
| Example 17 | 7 | -33.1 | 62.7 | 18.45 | 0 | 95 |
| Example 18 | 7 | -20.4 | 36.4 | 19.57 | 0 | 95 |
| Example 19 | 7 | -6.3 | 55.6 | 21.28 | 0 | 96 |
| Example 20 | 7 | -54.1 | 68.7 | 22.01 | 0 | 96 |
| Example 21 | 7 | -41.9 | 61.8 | 19.42 | 0 | 95 |
| Example 22 | 7 | -28.4 | 76.2 | 18.37 | 0 | 95 |
| Example 23 | 7 | 39.8 | 61 | 6.23 | 0.5 | 91 |
| Example 24 | 7 | 3.9 | 84 | 18.21 | 0 | 95 |
| Example 25 | 7 | 24.8 | 27.6 | 16.83 | 0 | 95 |
| Example 26 | 7 | 24.8 | 27.6 | 20.64 | 0 | 95 |
| Example 27 | 7 | 24.8 | 27.6 | 18.65 | 0 | 95 |
| Example 28 | 7 | 24.8 | 27.6 | 17.21 | 0 | 95 |
| Example 29 | 7 | 24.8 | 27.6 | 17.53 | 0 | 95 |
| Example 30 | 7 | 24.8 | 27.6 | 18.02 | 0 | 95 |
| Example 31 | 7 | 24.8 | 27.6 | 15.62 | 0 | 94 |
| Example 32 | 7 | 24.8 | 27.6 | 16.65 | 0 | 94 |
| Example 33 | 7 | 24.8 | 27.6 | 17.01 | 0 | 95 |
| Example 34 | 7 | 24.8 | 27.6 | 20.45 | 0 | 95 |
| Example 35 | 7 | 24.8 | 27.6 | 20.64 | 0 | 95 |
| Example 36 | 7 | 24.8 | 27.6 | 20.12 | 0 | 95 |
| Example 37 | 7 | 24.8 | 27.6 | 15.58 | 0 | 94 |
| Example 38 | 7 | 24.8 | 27.6 | 20.85 | 0 | 96 |
| Example 39 | 7 | 24.8 | 27.6 | 21.95 | 0 | 96 |
| Example 40 | 7 | 24.8 | 27.6 | 20.12 | 0 | 95 |
| Example 41 | 7 | 24.8 | 27.6 | 20.71 | 0 | 96 |
| Example 42 | 7 | 24.8 | 27.6 | 21.09 | 0 | 96 |
| Example 43 | 7 | 24.8 | 27.6 | 21.95 | 0 | 96 |
| Example 44 | 7 | 24.8 | 27.6 | 24.05 | 0 | 96 |
| Example 45 | 7 | 24.8 | 27.6 | 22.65 | 0 | 96 |
| Example 46 | 7 | 24.8 | 27.6 | 20.72 | 0 | 96 |
| Example 47 | 7 | 24.8 | 27.6 | 18.23 | 0 | 95 |
| Example 48 | 7 | 24.8 | 27.6 | 16.83 | 0 | 94 |
| Example 49 | 7 | 24.8 | 27.6 | 18.67 | 0 | 95 |
| Example 50 | 7 | 24.8 | 27.6 | 16.92 | 0 | 95 |
| Example 51 | 7 | 24.8 | 27.6 | 15.72 | 0 | 94 |
| Example 52 | 7 | 24.8 | 27.6 | 17.53 | 0 | 95 |
| Example 53 | 7 | 24.8 | 27.6 | 18.67 | 0 | 95 |
| Example 54 | 7 | 24.8 | 27.6 | 19.68 | 0 | 95 |
| Example 55 | 7 | 24.8 | 27.6 | 18.43 | 0 | 95 |
| Example 56 | 7 | 24.8 | 27.6 | 16.42 | 0 | 94 |
| Example 57 | 7 | 24.8 | 27.6 | 14.33 | 0 | 93 |
| Example 58 | 7 | 48.9 | 92.1 | 5.62 | 0.5 | 89 |
| Example 59 | 7 | 48.9 | 62.7 | 5.85 | 0.5 | 90 |
| Example 60 | 7 | 48.9 | 38.5 | 6.01 | 0.5 | 90 |
| Comparative Example 1 | 7 | / | 50.1 | 3.06 | 5.2 | 83 |
| Comparative Example 2 | 7 | 16.9 | / | 3.56 | 4.6 | 85 |
| Comparative Example 3 | 7 | 18.4 | 38.5 | 5.32 | 0.5 | 88 |
| Comparative Example 4 | 7 | 15.5 | 38.5 | 3.21 | 1.6 | 87 |
| Comparative Example 5 | 7 | 8 | 38.5 | 4.53 | 0.8 | 87 |
| Comparative Example 6 | 7 | 106.1 | 38.5 | 1.51 | 2.8 | 86 |
| Comparative Example 7 | 7 | 165 | 38.5 | 1.15 | 5.1 | 82 |
| Comparative Example 8 | 7 | 133.4 | 38.5 | 1.87 | 4.2 | 83 |
| Comparative Example 9 | 7 | 16.9 | 60.8 | 4.23 | 1 | 87 |
| Comparative Example 10 | 7 | 16.9 | 55 | 2.31 | 2.6 | 86 |
| Comparative Example 11 | 7 | 16.9 | 153 | 1.65 | 4.5 | 83 |
| Comparative Example 12 | 7 | 16.9 | 125 | 2.12 | 2.9 | 86 |
| Comparative Example 13 | 7 | 16.9 | 138.5 | 1.77 | 4.5 | 83 |
| Comparative Example 14 | 7 | 39.8 | / | 4.26 | 1.1 | 87 |

As can be seen from Table 4, the polymers of Examples 1-60 all exhibited two glass transition temperatures, and the cold-pressing binding force between the separation film and the negative electrode plate, the hardness of the battery cell, and the capacity retention rate of the battery were higher than those of Comparative Examples 1-14, suggesting that the use of the polymer on the separation film can achieve the cold-pressing binding between the separation film and the electrode plates, thus providing a proper binding force and improving the cycle performance of the battery.

In the description of this specification, the description of reference terms "one embodiment", "some embodiments", "an example", "a specific example", or "some examples", and the like means that a particular feature, structure, material, or characteristic described in connection with the embodiments or examples is included in at least one embodiment or example of the present application. In this specification, the illustrative expressions of the above terms are not necessarily directed to the same embodiment or example. Moreover, the specific features, structures, materials, or characteristics described may be combined appropriately in any one or more embodiments or examples. In addition, various embodiments or examples and features of various embodiments or examples described in this specification can be combined by one skilled in the art to the extent that they do not contradict each other.

Although the embodiments of the present application have been shown and described above, it will be appreciated that the above embodiments are exemplary and should not be construed as limiting the present application, and that changes, modifications, substitutions, and alterations can be made to the above embodiments by those of ordinary skill in the art within the scope of the present application.

## Claims

1. A polymer, comprising a first organic polymer and a second organic polymer, wherein the monomers of the first organic polymer comprise a first monomer, a second monomer, and a third monomer, and the monomers of the second organic polymer comprise the first monomer, the third monomer, and a fourth monomer; the structure of the first monomer comprises: 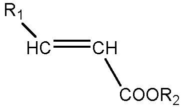
wherein R₁ comprises a hydrogen atom or an alkyl having 1-18 carbon atoms, and R₂ comprises an alkyl having 1-18 carbon atoms;
the structure of the second monomer comprises: 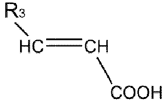
wherein R₃ comprises a hydrogen atom or a substituted or unsubstituted alkyl having 1-18 carbon atoms;
the structure of the third monomer comprises: 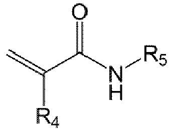
wherein R₄ comprises a hydrogen atom or an alkyl having 1-6 carbon atoms, and R₅ comprises a hydrogen atom, a hydroxyl-substituted alkyl having 1-6 carbon atoms, or an alkoxyl having 1-6 carbon atoms;
the structure of the fourth monomer comprises: 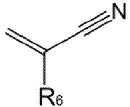
wherein R₆ comprises a hydrogen atom or an alkyl having 1-6 carbon atoms.

2. The polymer according to claim 1, wherein the mass ratio of the first organic polymer to the second organic polymer is 1:(0.1-10), optionally 1:(0.5-3).

3. The polymer according to claim 1 or 2, wherein in the monomers of the first organic polymer, the mass ratio of the first monomer, the second monomer, and the third monomer is 1:(0.05-0.5):(0.05-0.5), optionally 1:(0.056-0.5):(0.056-0.5).

4. The polymer according to any one of claims 1-3, wherein the mass ratio of the first monomer, the third monomer, and the fourth monomer in the monomers of the second organic polymer is 1:(0.05-0.5):(0.05-0.5), optionally 1:(0.056-0.5):(0.056-0.5).

5. The polymer according to any one of claims 1-4, wherein the first monomer comprises at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, or 2-hydroxypropyl methacrylate.

6. The polymer according to any one of claims 1-5, wherein the second monomer comprises at least one of acrylic acid, methacrylic acid, butenoic acid, or heptenoic acid.

7. The polymer according to any one of claims 1-6, wherein the third monomer comprises at least one of acrylamide, N-methylolacrylamide, or N-butoxymethylacrylamide.

8. The polymer according to any one of claims 1-7, wherein the fourth monomer comprises at least one of acrylonitrile or methacrylonitrile.

9. The polymer according to any one of claims 1-8, further comprising a dispersant, wherein the dispersant comprises at least one of sodium polystyrene sulfonate, sodium gluconate, sodium polyacrylate, sodium polymethacrylate, sodium polyphosphate, sodium lignosulfonate, or sodium polycarboxylate.

10. The polymer according to claim 9, wherein the number average molecular weight of the dispersant is 1,000-100,000, optionally 5,000-80,000.

11. The polymer according to claim 9 or 10, wherein the mass ratio of the first organic polymer, the second organic polymer, and the dispersant is 1:(0.1-10):(0.01-2), optionally 1:(0.5-3):(0.05-1.5).

12. The polymer according to any one of claims 1-11, further comprising a butadiene-based polymer.

13. The polymer according to claim 12, wherein the glass transition temperature of the butadiene-based polymer is less than or equal to 20 °C, optionally less than or equal to 15 °C.

14. The polymer according to claim 12 or 13, wherein the volume average particle size Dv50 of the butadiene-based polymer is 100 nm to 300 nm, optionally 120 nm to 250 nm.

15. The polymer according to any one of claims 12-14, wherein the viscosity of the butadiene-based polymer at 25 °C is 10 mPa·s to 300 mPa·s. Optionally 80 mPa·s to 200 mPa·s.

16. The polymer according to any one of claims 12-15, wherein the butadiene-based polymer comprises at least one of polybutadiene, a styrene/butadiene copolymer, or an acrylonitrile/butadiene copolymer.

17. The polymer according to any one of claims 12-16, wherein the mass ratio of the first organic polymer, the second organic polymer, and the butadiene-based polymer is 1:(0.1-10):(0.1-10), optionally 1:(0.5-3):(0.5-8).

18. The polymer according to any one of claims 1-17, wherein the polymer has a first glass transition temperature and a second glass transition temperature; the first glass transition temperature is less than or equal to 25 °C, and the second glass transition temperature is greater than 25 °C.

19. The polymer according to claim 18, wherein the first glass transition temperature is - 80 °C to 25 °C, optionally -60 °C to 25 °C.

20. The polymer according to claim 18 or 19, wherein the second glass transition temperature is 26 °C to 100 °C, optionally 26 °C to 90 °C.

21. The polymer according to any one of claims 1-20, wherein the volume average particle size Dv50 of the polymer is 1 µm to 15 µm, optionally 5 µm to 10 µm; and/or,
the number-weighted particle size distribution Dn10 of the polymer is 1 µm to 5 µm, optionally 1 µm to 3 µm.

22. A method for preparing the polymer according to any one of claims 1-21, comprising:
blending water, an emulsifier, an initiator, a first organic monomer, a second monomer, and a third monomer to give a first polymer emulsion;
blending water, the emulsifier, the initiator, a first monomer, the third monomer, and a fourth monomer to give a second polymer emulsion; and
mixing the first polymer emulsion and the second polymer emulsion to give a polymer.

23. The method according to claim 22, wherein a dispersant and/or a butadiene-based polymer is further added during mixing the first polymer emulsion and the second polymer emulsion.

24. A separation film, comprising the polymer according to any one of claims 1-21 or a polymer prepared by the method according to claim 22 or 23.

25. An electrode plate, comprising the polymer according to any one of claims 1-21 or a polymer prepared by the method according to claim 22 or 23.

26. A battery, comprising the separation film according to claim 24 and/or the electrode plate according to claim 25.

27. An electric device, comprising the battery according to claim 26.
